# EUROPEAN PATENT APPLICATION

(11) **EP 3 923 149 A1**
(43) Date of publication of application: **15.12.2021**
(21) Application number: 20752363.0
(22) Date of filing: 21.01.2020
(51) Int. Cl.: G06F 13/00, G06F 3/01, G06F 3/0481, G06F 3/0484, G06F 3/0488, H04N 7/14

(54) **INFORMATION PROCESSING DEVICE AND INFORMATION PROCESSING METHOD**

(30) Priority: 04.02.2019 JP 2019017646
(71) Applicant: Sony Group Corporation, 108-0075 Tokyo (JP)
(72) Inventor: NAGANO Kae, Tokyo 108-0075 (JP); KOIKE Ryusei, Tokyo 108-0075 (JP); SATO Koji, Tokyo 108-0075 (JP); FURUSAWA Koji, Tokyo 141-0022 (JP)
(74) Representative: MFG Patentanwälte Meyer-Wildhagen Meggle-Freund Gerhard PartG mbB
(86) International application number: PCT/JP2020/001795
(87) International publication number: WO 2020/162154

(57) **Abstract**

The present disclosure relates to an information processing device and an information processing method capable of providing a better user experience.

Included are: a detection result acquiring unit that acquires a detection result that is obtained as a result of sensing one of at least two users when communication is performed by the users while viewing each other's images transmitted and received via a network; an information processing unit that performs an information process so that a presentation content presented on a side of one of the users is different from a presentation content on a side of another one of the users on the basis of the detection result; and a display control unit that performs display control to display an image which is the presentation content in accordance with the information process. The present technology is applicable to, for example, a remote communication system.

## Description

### TECHNICAL FIELD

The present disclosure relates to information processing devices and information processing methods, and more particularly to an information processing device and an information processing method capable of providing a better user experience.

### BACKGROUND ART

In the related art, the development of remote communication systems is progressing which enable users in remote locations to communicate with each other as if they are facing each other.

In such remote communication systems, it is assumed that asymmetrical parts occur in information to be presented or in the operation due to differences in the roles of both parties, the content of data being handled, the systems, etc. Therefore, for example, as asymmetric display control, it is conceivable to perform such a process that a person or an object in a captured image is separated from the background and that the position or the size of the person or the object is restructured and is thereby presented to one of the users.

For example, Patent Document 1 discloses technology for synthesizing a motion transition image by separating a moving subject layer and a background layer in an image with respect to frame image data.

### CITATION LIST

### PATENT DOCUMENT

Patent Document 1: Japanese Patent Application Laid-Open No. 2011-30244

### SUMMARY OF THE INVENTION

### PROBLEMS TO BE SOLVED BY THE INVENTION

Meanwhile, in remote communication systems, it is desired to provide a better user experience in consideration of asymmetrical parts as described above.

The present disclosure has been made in view of such circumstances and is intended to enable provision of a better user experience.

### SOLUTIONS TO PROBLEMS

A first information processing device of one aspect of the present disclosure includes an information processing unit that performs an information process so that a presentation content presented on a side of one of at least two users is different from a presentation content on a side of another one of the users on the basis of a detection result obtained as a result of sensing one of the users when communication is performed by the users while viewing each other's images transmitted and received via a network.

An information processing method of one aspect of the present disclosure includes performing an information process so that a presentation content presented on a side of one of at least two users is different from a presentation content on a side of another one of the users on the basis of a detection result obtained as a result of sensing one of the users when communication is performed by the users while viewing each other's images transmitted and received via a network.

A second information processing device of one aspect of the present disclosure includes an information processing unit that performs an information process so that a presentation content presented on a side of one of at least two users is different from a presentation content on a side of another one of the users on the basis of a detection result obtained as a result of sensing one of the users by performing communication with a terminal that is used when communication is performed by the users while viewing each other's images transmitted and received via a network.

In one aspect of the present disclosure, an information process is performed so that a presentation content presented on a side of one of at least two users is different from a presentation content on a side of another one of the users on the basis of a detection result obtained as a result of sensing one of the users by performing communication with a terminal that is used when communication is performed by the users while viewing each other's images transmitted and received via a network.

### BRIEF DESCRIPTION OF DRAWINGS

Fig. 1 is a block diagram illustrating a configuration example of a first embodiment of a remote communication system to which the present technology is applied.
Fig. 2 is a block diagram illustrating a configuration example of a communication processing unit.
Fig. 3 is a diagram explaining about a first communication process.
Fig. 4 is a diagram explaining about the first communication process.
Fig. 5 is a flowchart explaining the first communication process.
Fig. 6 is a diagram explaining about a second communication process.
Fig. 7 is a flowchart explaining the second communication process.
Fig. 8 is a diagram illustrating an example of shared area coordinates.
Fig. 9 is a diagram explaining about a third communication process.
Fig. 10 is a flowchart explaining the third communication process.
Fig. 11 is a diagram explaining about a fourth communication process.
Fig. 12 is a flowchart explaining the fourth communication process.
Fig. 13 is a diagram explaining about a fifth communication process.
Fig. 14 is a diagram explaining about first display control in the fifth communication process.
Fig. 15 is a diagram explaining about second display control in the fifth communication process.
Fig. 16 is a flowchart explaining the fifth communication process in which the first display control is performed.
Fig. 17 is a flowchart explaining the fifth communication process in which the second display control is performed.
Fig. 18 is a diagram explaining about a first display case of a sixth communication process.
Fig. 19 is a diagram explaining about a second display case of the sixth communication process.
Fig. 20 is a diagram explaining about a third display case of the sixth communication process.
Fig. 21 is a diagram explaining about initial information.
Fig. 22 is a flowchart explaining the sixth communication process.
Fig. 23 is a flowchart explaining a first pointing display process.
Fig. 24 is a diagram explaining display directions of a document image and a pointing image in the first pointing display process.
Fig. 25 is a flowchart explaining a second pointing display process.
Fig. 26 is a diagram explaining display directions of a document image and a pointing image in the second pointing display process.
Fig. 27 is a flowchart illustrating a third pointing display process.
Fig. 28 is a diagram explaining display directions of a document image and a pointing image in the third pointing display process.
Fig. 29 is a diagram explaining about a seventh communication process.
Fig. 30 is a flowchart explaining the seventh communication process.
Fig. 31 is a diagram explaining about an eighth communication process.
Fig. 32 is a flowchart explaining the eighth communication process.
Fig. 33 is a block diagram illustrating a configuration example of a second embodiment of a remote communication system.
Fig. 34 is a diagram explaining an example of a communication process performed in the remote communication system of Fig. 33.
Fig. 35 is a diagram explaining a display position adjustment process.
Fig. 36 is a flowchart explaining a first process example of a ninth communication process.
Fig. 37 is a flowchart illustrating a second process example of the ninth communication process.
Fig. 38 is a flowchart explaining a tenth communication process.
Fig. 39 is a block diagram illustrating a configuration example of a third embodiment of a remote communication system.
Fig. 40 is a block diagram illustrating an exemplary configuration of an embodiment of a computer to which the present technology is applied.

### MODE FOR CARRYING OUT THE INVENTION

Hereinafter, specific embodiments to which the present technology is applied will be explained in detail by referring to the drawings.

### <First Configuration Example of Remote Communication System>

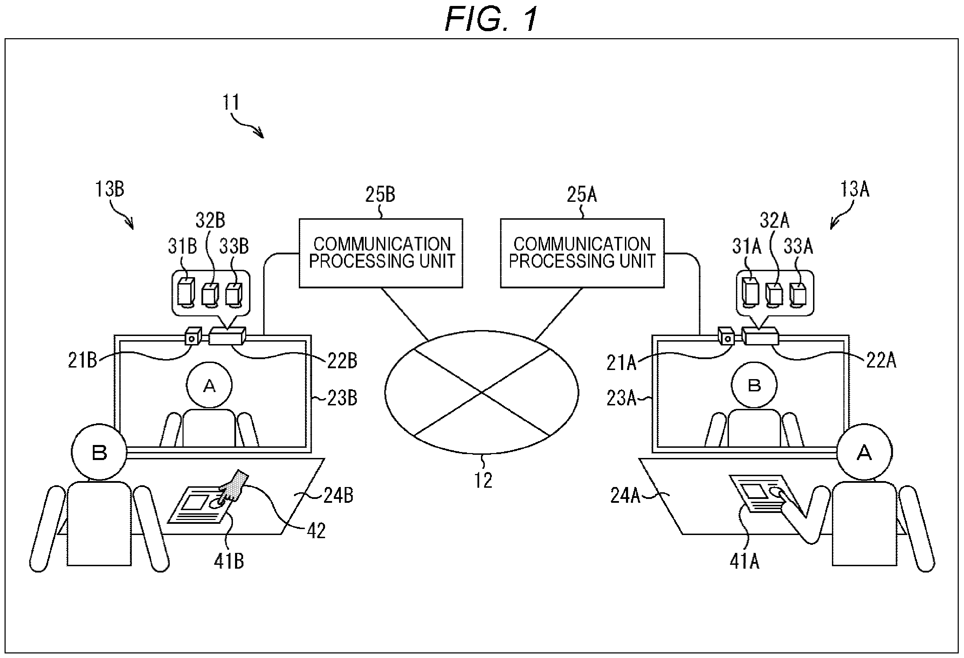

Fig. 1 is a block diagram illustrating a configuration example of a first embodiment of a remote communication system to which the present technology is applied.

As illustrated in Fig. 1, a remote communication system 11 includes communication terminals 13A and 13B, at remote locations, which are connected via a network 12 such as the Internet.

For example, in the remote communication system 11, the communication terminals 13A and 13B can transmit and receive images and sound to and from each other in real time by remotely communicating through the network 12. As a result, a user A on the communication terminal 13A side and a user B on the communication terminal 13B side can have a conversation as if they are facing each other, and more realistic communication can be achieved.

Note that the communication terminals 13A and 13B are configured in similar manners and that, in a case where it is not necessary to distinguish them, they are simply referred to as the communication terminals 13, and respective units included in the communication terminals 13A and 13B are also referred to in similar manners. Furthermore, hereinafter, of communication processes performed in the communication terminals 13, only the processes related to images will be described, whereas description of the processes related to the sound will be omitted.

A communication terminal 13 includes a camera 21, a projector unit 22, a display unit 23, a desk-type screen 24, and a communication processing unit 25.

The camera 21 captures an image toward the front of the display unit 23 and supplies to the communication processing unit 25, for example, an image signal obtained by imaging a user facing the display unit 23.

As illustrated in the drawing, the projector unit 22 includes a projector main body 31, a stereo camera 32, and an RGB camera 33. Of course, the projector main body 31, the stereo camera 32, and the RGB camera 33 may be configured as separate units.

The projector main body 31 projects various images such as a document image 41 or a pointing image 42 onto the desk-type screen 24 in accordance with a display control signal supplied from the communication processing unit 25 and displays these images. The stereo camera 32 acquires a depth signal indicating the depth direction of an object such as a user's hand on the desk-type screen 24 by using the parallax of the two imaging devices and supplies the depth signal to the communication processing unit 25. The RGB camera 33 captures an image toward the desk-type screen 24 and supplies an image signal obtained by imaging an object such as a user's hand on the desk-type screen 24 to the communication processing unit 25.

The display unit 23 includes a display device such as a liquid crystal panel or an organic electro luminescence (EL) panel and displays, for example, an image capturing the user on the other side on the basis of a display control signal supplied from the communication processing unit 25.

The desk-type screen 24 has a function as a screen for clearly showing an image projected from the projector unit 22 on a desk on which objects are placed or work is performed.

The communication processing unit 25 performs a communication process so that users can communicate well with each other via the network 12. For example, when the user A performs a pointing gesture such as pointing to a predetermined specified point of a document image 41A, the communication processing unit 25 can perform a process of displaying the pointing image 42 so as to point to a corresponding specified point of a document image 41B.

In this manner, the remote communication system 11 can achieve communication as if the user A and the user B are facing each other and can be used for purposes such as that the user A explains to the user B using the document image 41. Therefore, in the following, the user A of the communication terminal 13A is also referred to as an explainer, and the user B of the communication terminal 13B is also referred to as a customer.

Then, in the remote communication system 11, it is possible to allow the user B to easily recognize the point where the user A is explaining by displaying the pointing image 42 on the document image 41B depending on the pointing gesture of the user A on the document image 41A. As a result, the remote communication system 11 can provide a better user experience with a smoother explanation.

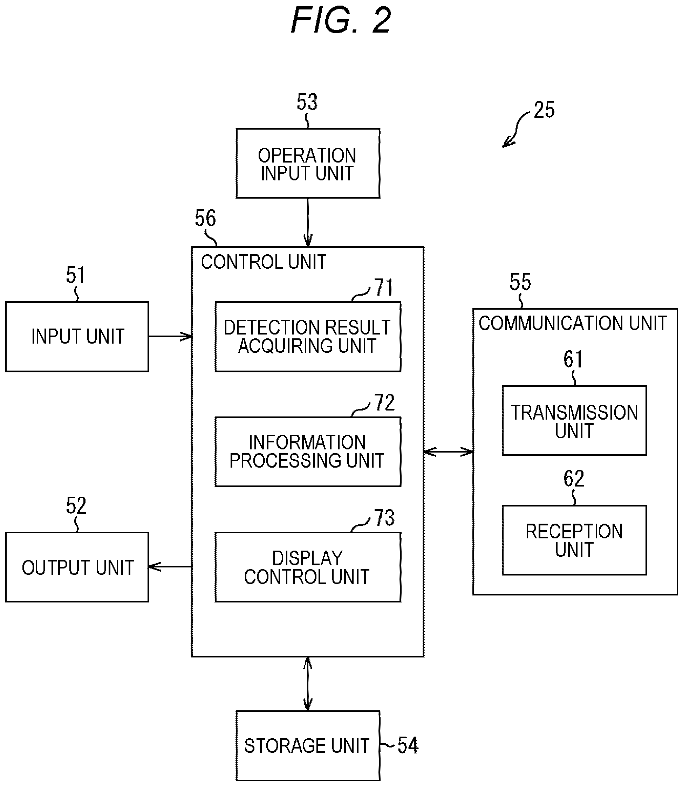

Fig. 2 is a block diagram illustrating a configuration example of the communication processing unit 25.

As illustrated in Fig. 2, the communication processing unit 25 includes an input unit 51, an output unit 52, an operation input unit 53, a storage unit 54, a communication unit 55, and a control unit 56.

The input unit 51 is an interface for inputting an image signal output from the camera 21, a depth signal output from the stereo camera 32, an image signal output from the RGB camera 33, and the like to the communication processing unit 25 and supplies these signals to the control unit 56.

The output unit 52 is an interface for outputting a display control signal supplied from the control unit 56 to each of the projector main body 31 and the display unit 23.

The operation input unit 53 is an interface for inputting an operation signal depending on a user's operation to an operation unit (for example, a keyboard, a mouse, a touch panel, etc.) (not illustrated) and supplies the operation signal to the control unit 56.

The storage unit 54 stores various types of data required for the control unit 56 to control the communication processing unit 25, image data for displaying the document image 41 or the pointing image 42, and the like.

The communication unit 55 includes a transmission unit 61 and a reception unit 62 and communicates with a communication terminal 13 on the other side via the network 12 of Fig. 1. For example, in the communication unit 55, the transmission unit 61 transmits data supplied from the control unit 56 to the communication terminal 13 on the other side, and the reception unit 62 receives data transmitted from the communication terminal 13 on the other side and supplies the data to the control unit 56.

The control unit 56 includes a detection result acquiring unit 71, an information processing unit 72, and a display control unit 73 and performs control for the communication processing unit 25 to execute a communication process.

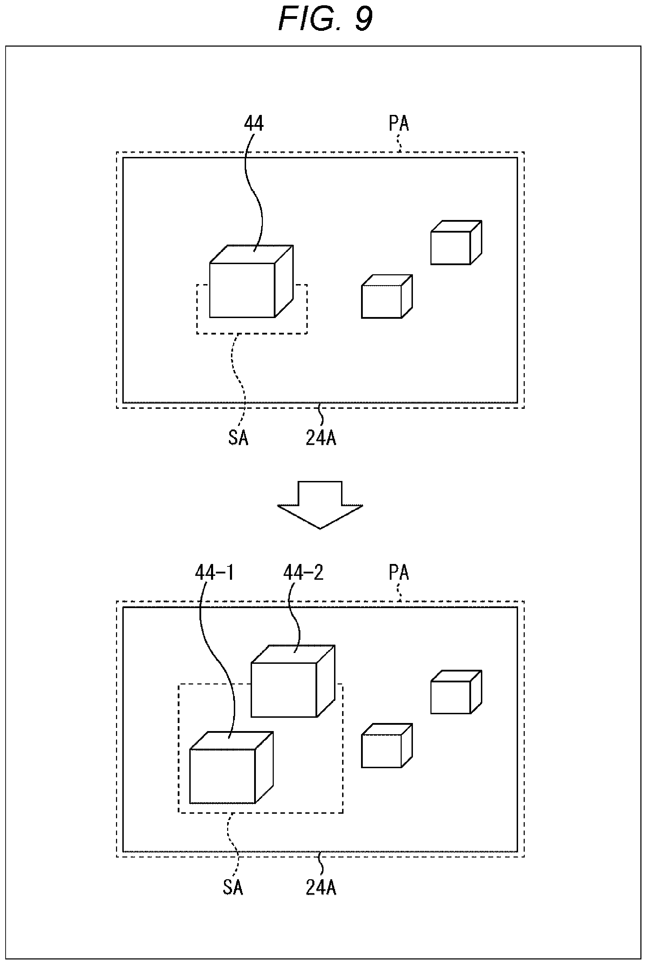

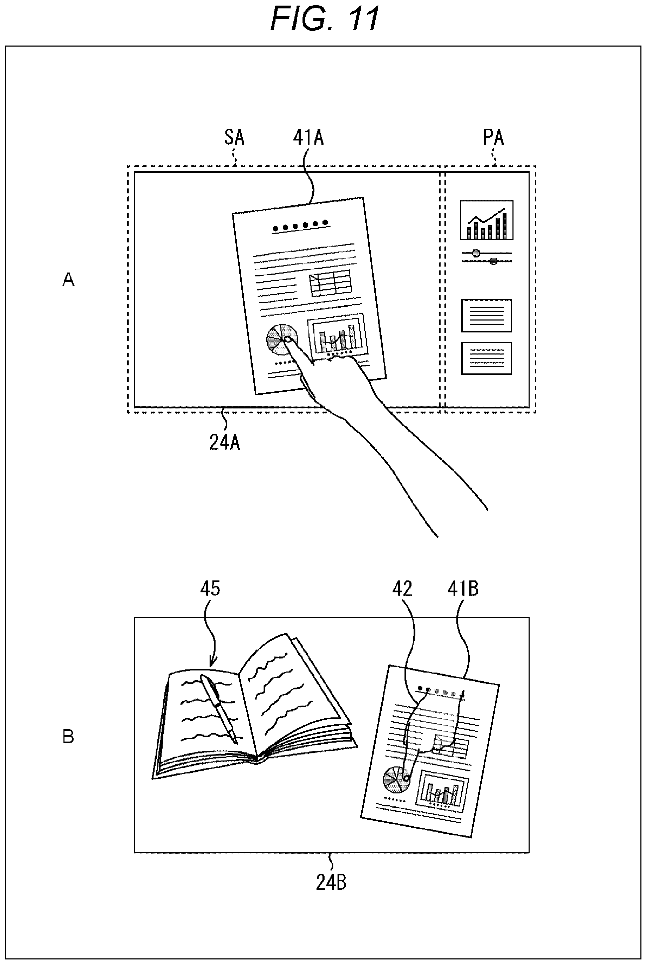

The detection result acquiring unit 71 detects, for example, the motion of a user's hand on the desk-type screen 24 on the basis of the depth signal output from the stereo camera 32 and the image signal output from the RGB camera 33 and acquires the detection result. At this point, the detection result acquiring unit 71 may perform a process of removing noise from those signals. Similarly, the detection result acquiring unit 71 detects a shared object 44, which will be described later by referring to Fig. 9, and an object 45, which will be described later by referring to Fig. 11, or the like and acquires the detection results thereof.

The information processing unit 72 performs information processes (processes such as an analysis or adjustment) so that an image displayed on the user B side is different from an image displayed on the user A side on the basis of the detection results acquired by the detection result acquiring unit 71. Then, the information processing unit 72 transmits various types of data (for example, image data, position information, coordinate information, etc., which will be described later) that need to be transmitted to the communication terminal 13 on the other side, in order to execute a communication process, via the communication unit 55.

The display control unit 73 acquires image data transmitted from the communication terminal 13 on the other side via the communication unit 55 and performs display control on the display unit 23 so as to display, for example, an image of the user on the other side depending on the image data. The display control unit 73 also reads image data from the storage unit 54 and controls the display of the projector main body 31 so that the document image 41 or the pointing image 42 is displayed at an appropriate display position.

### <First Communication Process>

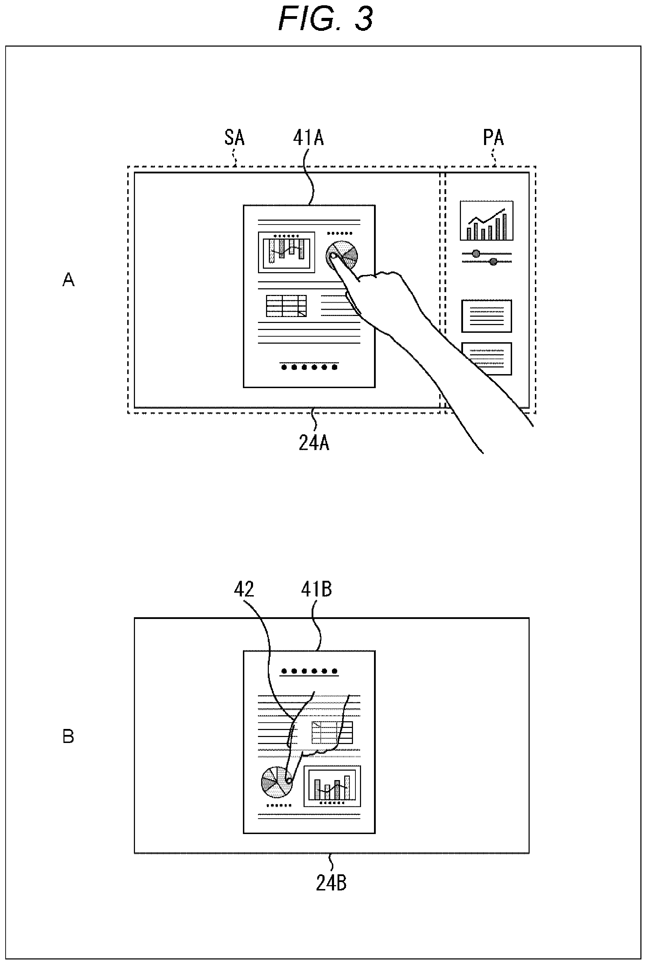

A first communication process executed in the remote communication system 11 will be described by referring to Figs. 3 to 5.

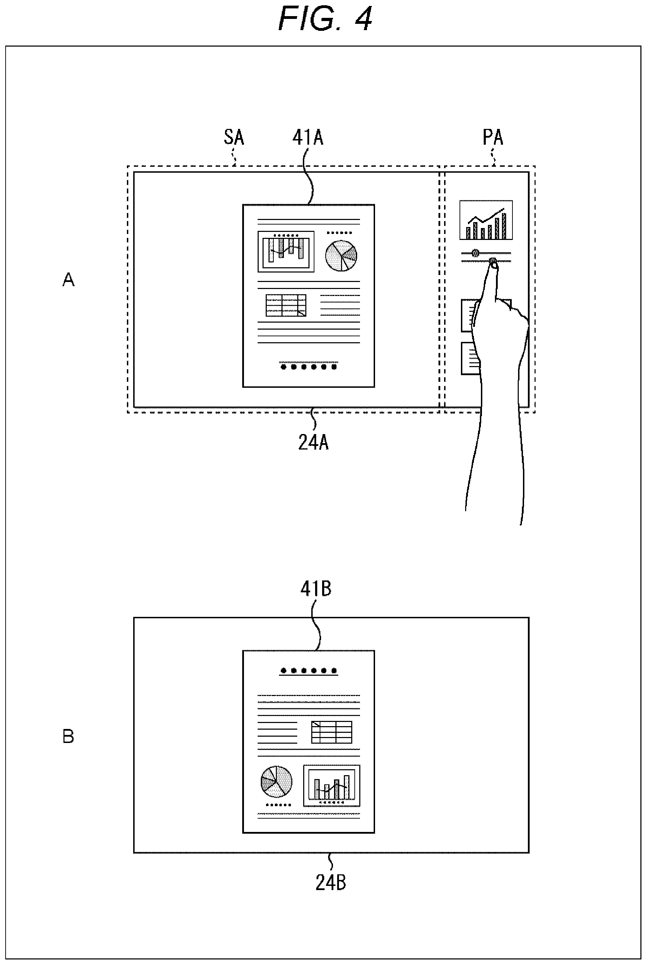

In A of Fig. 3 and A of Fig. 4, an exemplary situation of a desk-type screen 24A on the side of the user A, who is an explainer, is illustrated, and in B of Fig. 3 and B of Fig. 4, an exemplary situation of a desk-type screen 24B on the side of the user B, who is a customer, is illustrated.

In the remote communication system 11, a shared area SA and a private area PA are set on the desk-type screen 24A on the user A side. For example, an image shared with the user B is displayed in the shared area SA, and as illustrated in the drawing, when the document image 41A is displayed in the shared area SA, the document image 41B, the content of which is the same as that of the document image 41A, is displayed also on the desk-type screen 24B on the user B side. On the other hand, images that are not shared with the user B are displayed in the private area PA, and the images displayed in the private area PA are not displayed on the desk-type screen 24B on the user B side.

Furthermore, let us assume that, as illustrated in A of Fig. 3, the user A has performed a pointing gesture to point to a predetermined specified point of the document image 41A that is displayed in the shared area SA of the desk-type screen 24A. Correspondingly, as illustrated in B of Fig. 3, the desk-type screen 24B on the user B side displays the pointing image 42 so as to point to the corresponding specified point of the document image 41B.

On the other hand, as illustrated in A of Fig. 4, it is assumed that the user A has pointed to an image (for example, a user interface for performing an operation) displayed in the private area PA of the desk-type screen 24A. In this case, as illustrated in B of Fig. 4, the pointing image 42 is hidden on the desk-type screen 24B on the user B side. That is, the display control is performed so that the images displayed in the private area PA and the motion of the user A's hand in the private area PA are invisible from the user B side.

In this manner, in the remote communication system 11, in a case where the user A points to the document image 41A displayed in the shared area SA, the pointing image 42 is displayed in the document image 41B, and in a case where the private area PA is pointed to, the pointing image 42 is hidden.

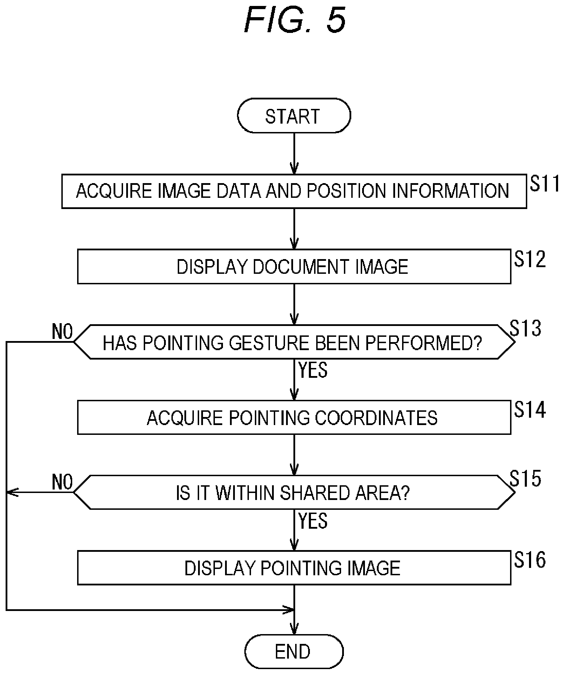

In Fig. 5, a flowchart explaining the first communication process is illustrated.

For example, the process is started when the user A performs an operation of giving an instruction on the display of a document to be shared when explaining to the user B and the operation signal is supplied to the control unit 56A via the operation input unit 53A of the communication processing unit 25A.

In step S11, in the communication processing unit 25A, a display control unit 73A reads image data of the document specified by the user from a storage unit 54A and controls the display of the projector main body 31A so as to display the document image 41A in the shared area SA of the desk-type screen 24A. Then, an information processing unit 72A acquires image data of the document image 41A displayed in the shared area SA and position information indicating the display position of the document image 41A on the desk-type screen 24A and transmits the image data and the position information to a communication processing unit 25B via the communication unit 55A.

In step S12, in the communication processing unit 25B, the display control unit 73B controls the display of the projector main body 31B so as to display the document image 41B on the desk-type screen 24B in a similar manner to the document image 41A on the basis of the image data and the position information acquired via the communication unit 55B. In response to this, the projector main body 31B displays the document image 41B, having the same content as that of the document image 41A, on the desk-type screen 24B depending on the image data so that the display position is in accordance with the position information.

In step S13, in the communication processing unit 25A, a detection result acquiring unit 71A detects the motion of the user A's hand on the desk-type screen 24A on the basis of a depth signal output from a stereo camera 32A and an image signal output from an RGB camera 33A and supplies the detection result to the information processing unit 72A. Then, the information processing unit 72A recognizes the motion of the user A's hand depending on the detection result of the motion of the user A's hand and determines whether or not the user A has performed a pointing gesture.

If the information processing unit 72A determines in step S13 that the user A has performed a pointing gesture, the process proceeds to step S14.

In step S14, in the communication processing unit 25A, the detection result acquiring unit 71A detects the positions of the fingertips of the user A on the basis of a depth signal output from the stereo camera 32A and an image signal output from the RGB camera 33A and supplies the detection result to the information processing unit 72A. Then, the information processing unit 72A acquires pointing coordinates indicating the coordinates of the specified point specified by the user A by a pointing gesture on the desk-type screen 24A depending on the detection result of the positions of the fingertips of the user A.

In step S15, the information processing unit 72A determines whether or not the pointing coordinates acquired in step S14 are within the shared area SA.

If the information processing unit 72A determines in step S15 that the pointing coordinates are within the shared area SA, the process proceeds to step S16.

In step S16, in the communication processing unit 25A, the information processing unit 72A transmits the coordinate information indicating the pointing coordinates to the communication processing unit 25B via the communication unit 55A. Then, in the communication processing unit 25B, the display control unit 73B controls the projector main body 31B so as to display the pointing image 42 in an arrangement pointing to the pointing coordinates in accordance with the coordinate information acquired via the communication unit 55B. In response to this, the projector main body 31B displays the pointing image 42 on the desk-type screen 24B so as to point to the specified point by the user A, and then the process is terminated.

On the other hand, if it is determined in step S13 that user A has not performed any pointing gesture, or if it is determined in step S15 that the pointing coordinates are not within the shared area SA, the pointing image 42 is not displayed, and the process is terminated.

As described above, in the first communication process, the pointing image 42 can be displayed when the inside of the shared area SA is pointed to on the basis of the pointing gesture of the user A, and the user A can explain smoother.

### <Second Communication Process>

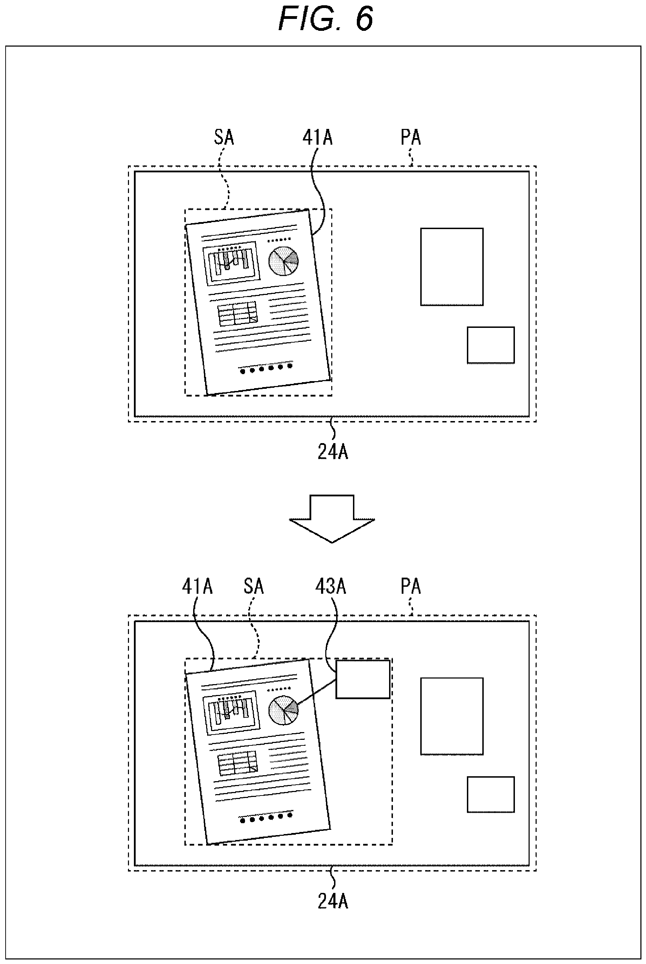

A second communication process executed in the remote communication system 11 will be described by referring to Figs. 6 to 8.

In Fig. 6, an exemplary situation of the desk-type screen 24A on the side of the user A, who is an explainer, is illustrated.

For example, as described by referring to Figs. 3 and 4, in the first communication process, the shared area SA and the private area PA are fixedly set on the desk-type screen 24A on the user A side. On the other hand, in the second communication process, the shared area SA can be set dynamically.

For example, in the second communication process, the shared area SA is set depending on the size or the orientation of the document image 41A that the user A wants to share with the user B when the document image 41A is displayed on the desk-type screen 24A. Then, on the desk-type screen 24A, an area other than the shared area SA is set as the private area PA. Note that, in the illustrated example, the contour rectangles of the shared area SA and the private area PA are set so as to extend along the outer shape of the desk-type screen 24A.

That is, as illustrated on the upper side of Fig. 6, when the user A wants to share only the document image 41A with the user B, the shared area SA having a rectangular contour that surrounds the document image 41A therein is set. Here, when the user A performs a tap gesture of tapping a point where an item is described in order to share, with the user B, related information related to the item described in the document image 41A, a related information image 43A is displayed outside the document image 41A. Accordingly, as illustrated in the lower side of Fig. 6, the shared area SA is updated so as to have a rectangular contour that surrounds the document image 41A and the related information image 43A therein. Furthermore, a connecting line is displayed which connects the item described in the document image 41A and the related information image 43A.

Therefore, on the user B side as well, the document image 41B and a related information image 43B (not illustrated) are displayed on the desk-type screen 24B in a similar manner to the document image 41A and the related information image 43A displayed in the shared area SA. Note that, when the user A performs an operation of hiding the related information image 43A thereafter, the shared area SA is updated so as to return to the original state as illustrated in the upper side of Fig. 6.

In this manner, in the remote communication system 11, the size of the shared area SA is modified depending on the size or the number of images that the user A wants to share with the user B.

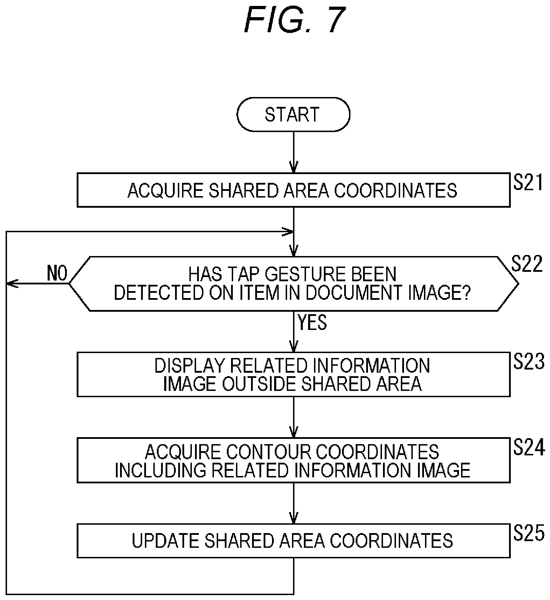

In Fig. 7, a flowchart explaining the second communication process is illustrated.

For example, the process is started when the display control unit 73A performs display control of displaying the document image 41A on the desk-type screen 24A in response to the operation of the user A.

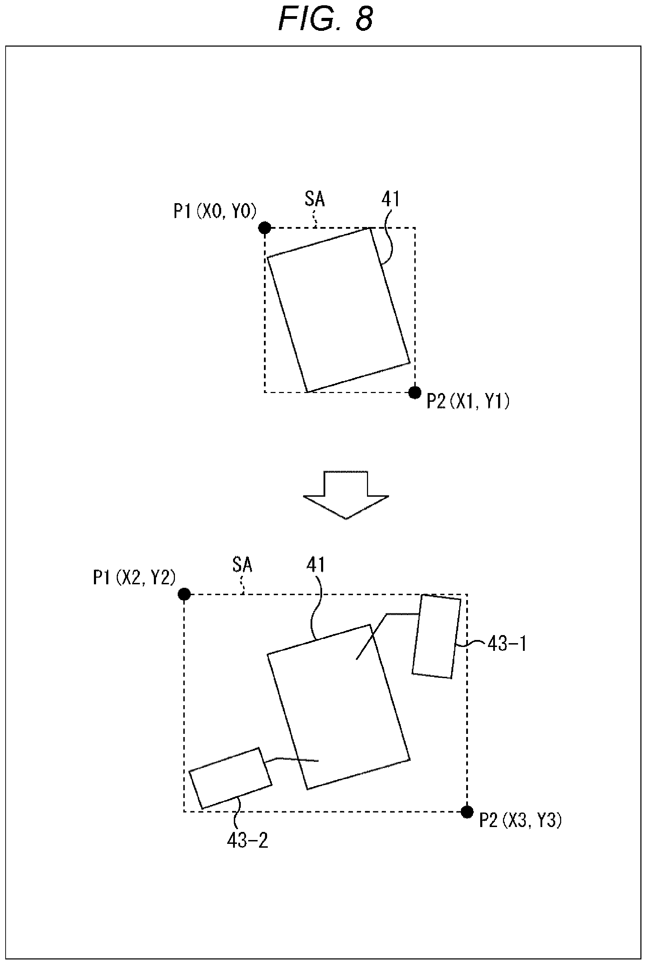

In step S21, in the communication processing unit 25A, the information processing unit 72A sets the shared area SA having a rectangular contour that surrounds the document image 41A therein that is displayed on the desk-type screen 24A, in accordance with the display control of the display control unit 73A. Then, the information processing unit 72A acquires, as the shared area coordinates that define the shared area SA, for example, upper left coordinates P1(X0, Y0) and lower right coordinates P2(X1, Y1) of the shared area SA as illustrated in the upper side of Fig. 8.

In step S22, in the communication processing unit 25A, a detection result acquiring unit 71A detects the motion of the user A's hand on the desk-type screen 24A on the basis of a depth signal output from the stereo camera 32A and an image signal output from the RGB camera 33A and supplies the detection result to the information processing unit 72A. Then, the information processing unit 72A recognizes the motion of the user A's hand depending on the detection result of the motion of the user A's hand and determines whether or not the user A has performed a tap gesture on an item of the document image 41A.

If the information processing unit 72A determines in step S22 that the user A has performed a tap gesture, the process proceeds to step S23. Note that if the information processing unit 72A determines that the user A has not performed a tap gesture, the process stands by in step S22.

In step S23, in the communication processing unit 25A, the display control unit 73A reads out image data for displaying related information related to an item on which the tap gesture has been performed by the user from the storage unit 54A. Then, the display control unit 73A controls the projector main body 31A so as to display the related information image 43A based on the image data outside the shared area SA, and the projector main body 31A displays the related information image 43A on the desk-type screen 24A.

In step S24, in the communication processing unit 25A, the information processing unit 72A acquires contour coordinates including the document image 41A and the related information image 43A displayed on the desk-type screen 24A.

In step S25, in the communication processing unit 25A, the information processing unit 72A updates the contour coordinates that have been acquired in step S24 as shared area coordinates that define the shared area SA. For example, the information processing unit 72A acquires, as the shared area coordinates that define the shared area SA, for example, upper left coordinates P1(X2, Y2) and lower right coordinates P2(X3, Y3) of the shared area SA as illustrated in the lower side of Fig. 8. Note that, in Fig. 8, a display example is illustrated in which two related information images 43-1 and 43-2 are displayed.

After the process of step S25, the process returns to step S22, and similar processes are repeated thereafter.

As described above, in the second communication process, it is possible to dynamically expand the shared area SA so that, for example, related information is shared with the user B depending on a tap gesture of the user A.

### <Third Communication Process>

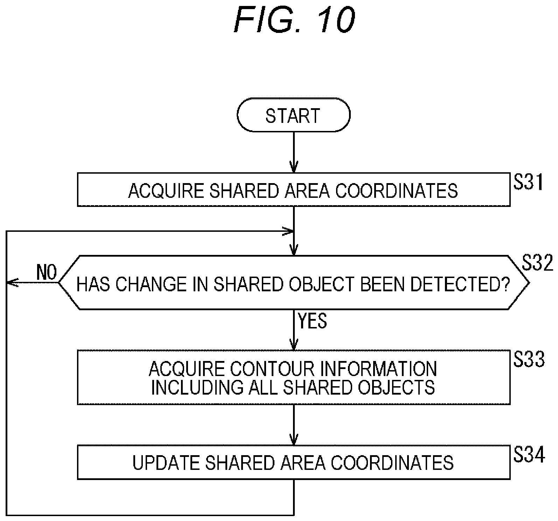

A third communication process executed in the remote communication system 11 will be described by referring to Figs. 9 and 10.

In Fig. 9, an exemplary situation of the desk-type screen 24A on the side of the user A, who is an explainer, is illustrated.

For example, as described by referring to Fig. 6, in the second communication process, the shared area SA is dynamically set on the basis of an image displayed on the desk-type screen 24A. On the other hand, in the third communication process, it is possible to dynamically set the shared area SA on the basis of a shared object placed on the desk-type screen 24A instead of an image.

That is, when a plurality of objects is placed on the desk-type screen 24A as illustrated in Fig. 9, the shared object 44 is recognized by image recognition using, for example, markers or the like. For example, as illustrated in the upper part of Fig. 9, in a case where user A places one shared object 44 on the desk-type screen 24A, a shared area SA having a rectangular contour that surrounds the one shared object 44 therein is set. Then, as illustrated in the lower part of Fig. 9, when the user A places two shared objects 44-1 and 44-2 on the desk-type screen 24A, the shared area SA is updated to have a rectangular contour that surrounds the two shared objects 44-1 and 44-2 therein.

In this manner, in the remote communication system 11, the size of the shared area SA is modified depending on the size or the number of shared objects 44 that the user A wants to share with the user B.

In Fig. 10, a flowchart explaining the third communication process is illustrated.

For example, the process starts when the user A places the shared object 44 on the desk-type screen 24A.

In step S31, in the communication processing unit 25A, the information processing unit 72A sets the shared area SA having a rectangular contour that surrounds the shared object 44 placed on the desk-type screen 24A by the user A therein. Then, the information processing unit 72A acquires shared area coordinates that define the shared area SA, as in step S21 of Fig. 7.

In step S32, in the communication processing unit 25A, the detection result acquiring unit 71A detects the shared object 44 on the desk-type screen 24A on the basis of a depth signal output from the stereo camera 32A and an image signal output from the RGB camera 33A and supplies the detection result to the information processing unit 72A. Then, the information processing unit 72A determines whether or not a change (addition or reduction) of the shared object 44 is detected depending on the detection result of the shared object 44.

If the information processing unit 72A determines in step S32 that a change in the shared object 44 has been detected, the process proceeds to step S33. Note that if the information processing unit 72A determines that no changes in the shared object 44 are detected, the process stands by in step S32.

In step S33, in the communication processing unit 25A, the information processing unit 72A acquires contour coordinates that include all the shared objects 44 placed on the desk-type screen 24A.

In step S34, in the communication processing unit 25A, the information processing unit 72A updates the contour coordinates acquired in step S33 as shared area coordinates that define the shared area SA, as in step S25 of Fig. 7. Here, the shared area SA is expanded when it is detected that a shared object 44 has been added, and the shared area SA is reduced when it is detected that shared objects 44 have been reduced.

After the process of step S34, the process returns to step S32, and similar processes are repeated thereafter.

As described above, in the third communication process, it is possible to dynamically expand or reduce the shared area SA depending on, for example, the addition or reduction of shared objects 44 placed on the shared object 44.

### <Fourth Communication Process>

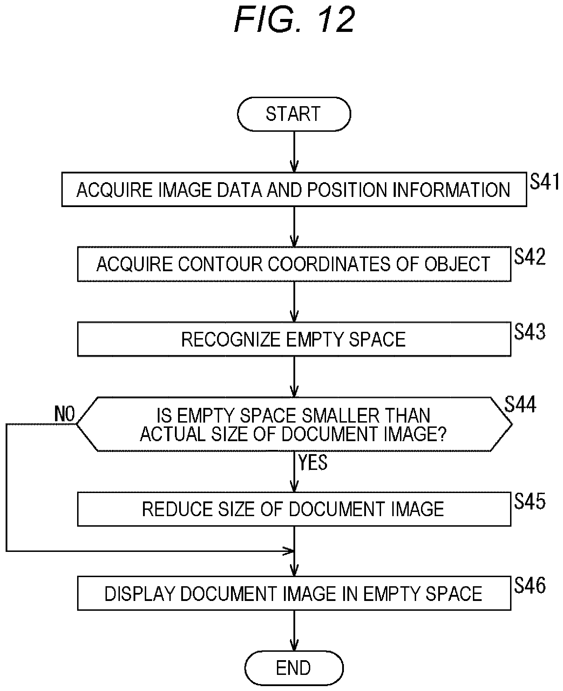

A fourth communication process executed in the remote communication system 11 will be described by referring to Figs. 11 and 12.

In A of Fig. 11, an exemplary situation of the desk-type screen 24A on the side of the user A, who is an explainer, is illustrated, and in B of Fig. 11, an exemplary situation of the desk-type screen 24B on the side of the user B, who is a customer, is illustrated.

For example, as described by referring to Fig. 3, in the first communication process, the document image 41B is displayed on the desk-type screen 24B in correspondence with the display position of the document image 41A on the desk-type screen 24A. Meanwhile, in the fourth communication process, the display position of the document image 41B can be adjusted depending on an object placed on the desk-type screen 24B.

That is, as illustrated in B of Fig. 11, in a case where an object 45 is placed on the desk-type screen 24B, if the document image 41B is made to correspond to the display position of the document image 41A illustrated in A of Fig. 11, the document image 41B will be displayed while overlapping with the object 45. Therefore, an empty space where the object 45 is not placed is detected, and the document image 41B is displayed in the empty space. At this point, in a case where the size of the empty space is smaller than the actual size of the document image 41B, the document image 41B can be reduced and displayed so as to fit in the empty space. In addition, the display position of the pointing image 42 is also adjusted depending on the adjustment of the display position of the document image 41B.

In this manner, in the remote communication system 11, the document image 41B is displayed so as not to overlap with the object 45 depending on the object 45 placed on the desk-type screen 24B.

In Fig. 12, a flowchart explaining the fourth communication process is illustrated.

For example, the process is started when the user A performs an operation of giving an instruction on the display of a document to be shared when explaining to the user B and the operation signal is supplied to the control unit 56A via the operation input unit 53A of the communication processing unit 25A.

In step S41, in the communication processing unit 25A, the display control unit 73A reads image data of a document specified by the user from a storage unit 54A and controls the display of the projector main body 31A so as to display the document image 41A in the shared area SA of the desk-type screen 24A. Then, an information processing unit 72A acquires image data of the document image 41A displayed in the shared area SA and position information indicating the display position of the document image 41A on the desk-type screen 24A and transmits the image data and the position information to a communication processing unit 25B via the communication unit 55A.

In step S42, in the communication processing unit 25B, a detection result acquiring unit 71B detects the object 45 placed on the desk-type screen 24B on the basis of a depth signal output from a stereo camera 32B and an image signal output from an RGB camera 33B and supplies the detection result to an information processing unit 72B. Then, on the basis of the detection result supplied from the information processing unit 72B, the information processing unit 72B acquires the contour coordinates of a rectangular contour that surrounds the object 45 therein.

In step S43, in the communication processing unit 25B, the information processing unit 72B recognizes an area other than the area where the object 45 is placed on the desk-type screen 24B as an empty space on the basis of the contour coordinates of the object 45 having been acquired in step S42.

In step S44, the information processing unit 72B determines whether or not the empty space recognized in step S43 is smaller than the actual size of the document image 41B.

If the information processing unit 72B determines in step S44 that the empty space is smaller than the actual size of the document image 41B, the process proceeds to step S45.

In step S45, in the communication processing unit 25B, the display control unit 73B performs image processing for reducing the document image 41B depending on the size of the empty space recognized by the information processing unit 72B.

After the process of step S45, or if it is determined in step S44 that the empty space is not smaller than the actual size of the document image 41B (that is, the empty space is larger than the actual size of the document image 41B), the processing proceeds to step S46.

In step S46, in the communication processing unit 25B, the display control unit 73B controls the display of the projector main body 31B so as to display the document image 41B in the empty space where the object 45 is not placed on the desk-type screen 24B. In response to this, the projector main body 31B displays the document image 41B having the same content as that of the document image 41A in the empty space on the desk-type screen 24B.

At this point, in a case where the process of step S45 has been performed, the document image 41B is reduced and displayed, and in a case where the process of step S45 has not been performed, the document image 41B is displayed in the actual size. In this manner, after the projector main body 31B displays the document image 41B in the empty space, the process is terminated.

As described above, in the fourth communication process, the position and the size for displaying the document image 41B are adjusted depending on an object placed on the desk-type screen 24B.

### <Fifth Communication Process>

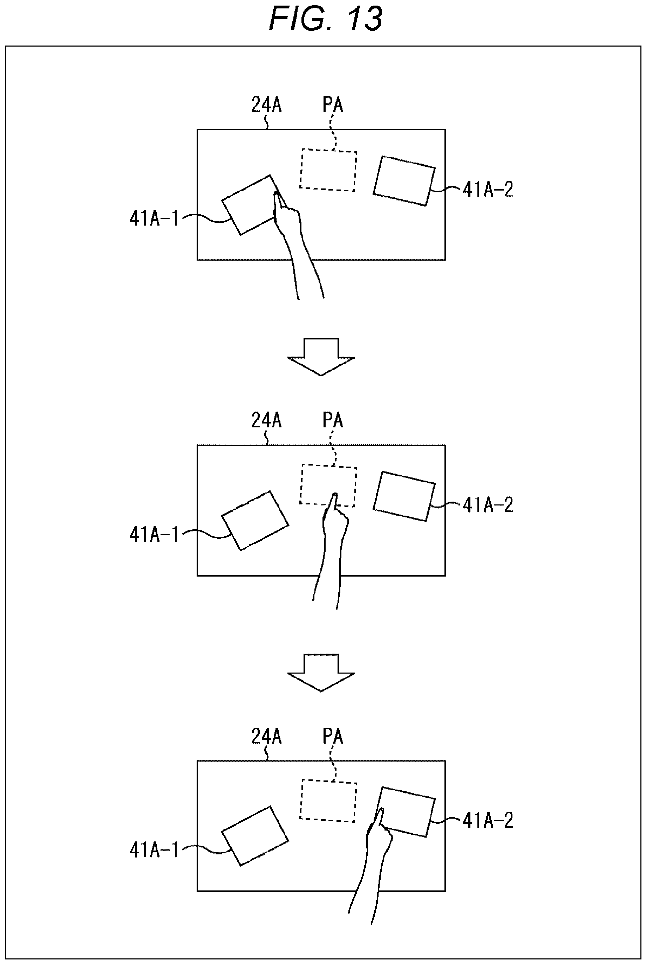

A fifth communication process executed in the remote communication system 11 will be described by referring to Figs. 13 to 17.

For example, in the fifth communication process, the display of the pointing image 42 is adjusted as appropriate when a pointing gesture of the user A passes through the private area PA.

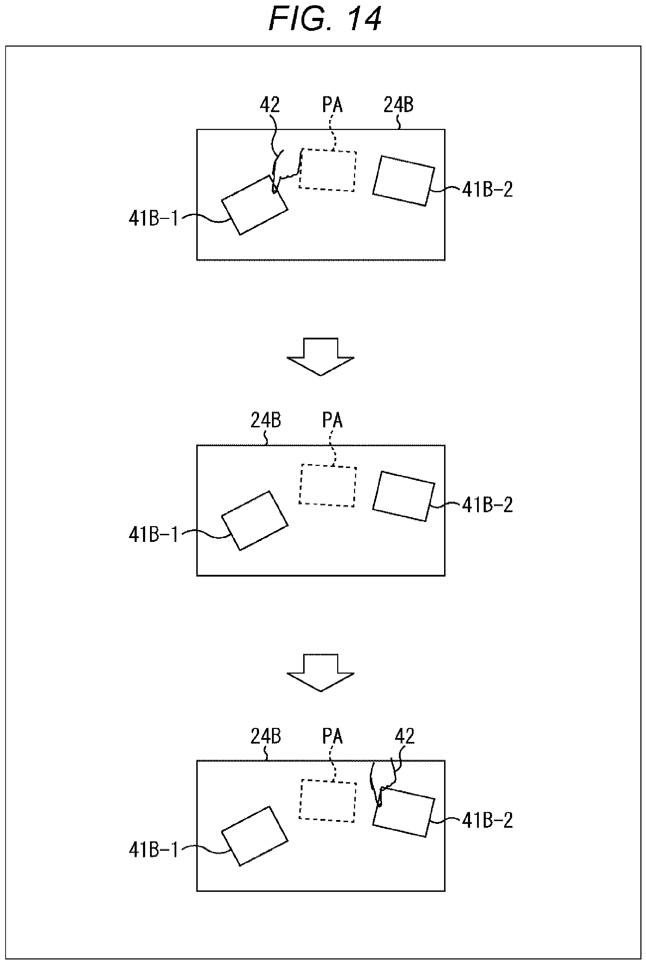

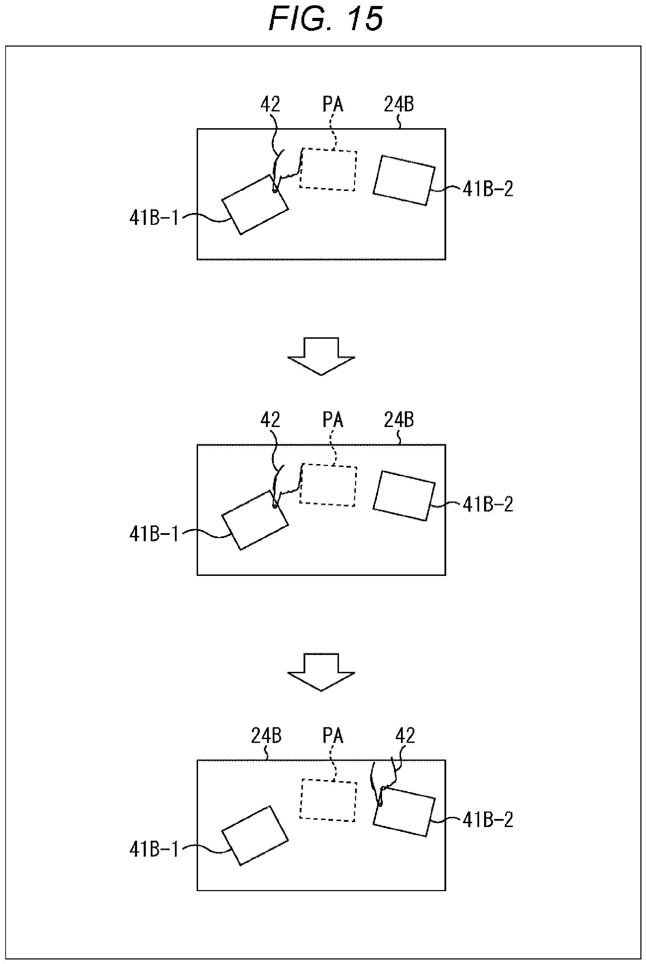

In Fig. 13, a situation in which the user A moves the hand while being in a pointing gesturing is illustrated. For example, in a case where a private area PA is set between a document image 41A-1 and a document image 41A-2, let us assume that the user A has pointed to document image 41A-1 and then performed an action of pointing to the document image 41A-2. When such an action is performed, it is recognized that the user A has performed a pointing gesture on the private area PA, and as described above, display control is performed so that the pointing image 42 is hidden. At this point, either first display control as described by referring to Fig. 14 or second display control as described by referring to Fig. 15 is performed.

As illustrated in Fig. 14, in the first display control of the pointing image 42, the display of the pointing image 42 is controlled so as to be hidden while a fingertip of the user A passes through the private area PA. That is, in the second display control of the pointing image 42, the display control is performed so that the pointing image 42 is displayed at an end of the document image 41A-2 after disappearing at an end of the document image 41A-1.

As illustrated in Fig. 15, in the second display control of the pointing image 42, the display of the pointing image 42 is controlled so that the update of the display of the pointing image 42 is stopped when the fingertip of the user A departs from the document image 41A-1 and that the display is updated when the fingertip of the user A approaches the document image 41A-2. That is, in the second display control of the pointing image 42, the display control is performed so that the pointing image 42 stopped at an end of the document image 41A-1 instantaneously moves to an end of the document image 41A-2.

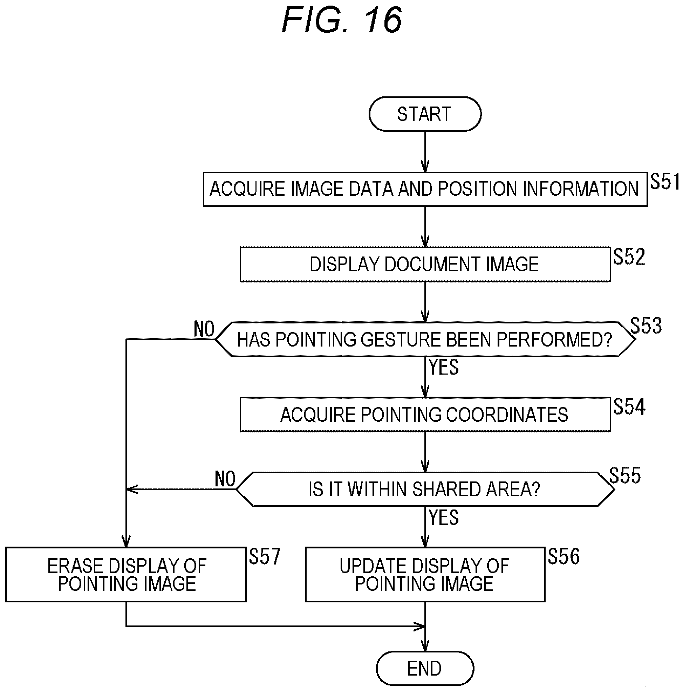

Illustrated in Fig. 16 is a flowchart explaining a fifth communication process in which the first display control as described by referring to Fig. 14 is performed.

In steps S51 to S55, similar processes to those in steps S11 to S15 of Fig. 5 are performed. Then, if the information processing unit 72A determines in step S55 that pointing coordinates are within the shared area SA, the process proceeds to step S56.

In step S56, in the communication processing unit 25B, the display control unit 73B controls the projector main body 31B to update the display of the pointing image 42 in an arrangement pointing to the pointing coordinates in accordance with the coordinate information transmitted from the communication processing unit 25A. In response to this, the projector main body 31B updates the pointing image 42 displayed on the desk-type screen 24B so as to point to the specified point by the user A, and then the process is terminated.

On the other hand, if it is determined in step S53 that the user A has not performed any pointing gesture, or if it is determined in step S55 that the pointing coordinates are not within the shared area SA, the process proceeds to step S57.

In step S57, in the communication processing unit 25B, the display control unit 73B controls the projector main body 31B so as to erase the display of the pointing image 42. In response to this, the projector main body 31B erases the display of the pointing image 42, and then the process is terminated.

As described above, in the fifth communication process in which the first display control is performed, the pointing image 42 is hidden while a fingertip of the user A passes through the private area PA as described by referring to Fig. 14.

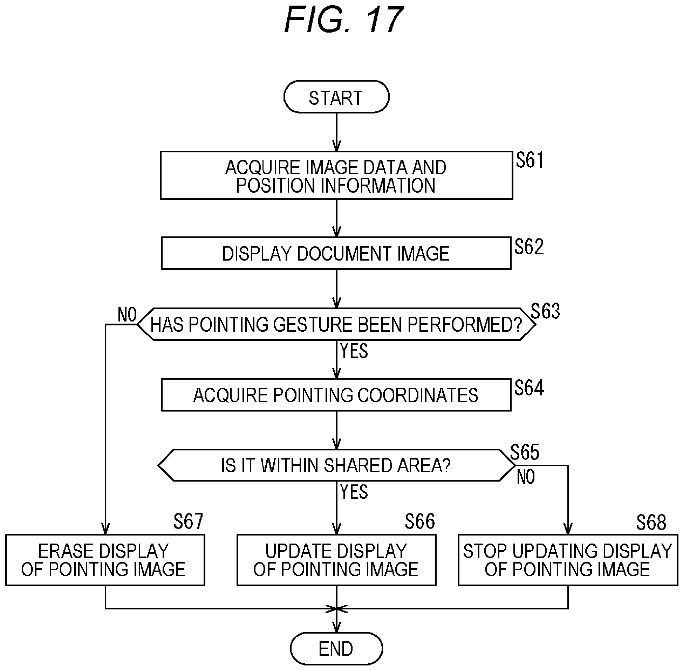

Illustrated in Fig. 17 is a flowchart explaining a fifth communication process in which the second display control as described by referring to Fig. 15 is performed.

In steps S61 to S67, similar processes to those in steps S51 to S57 of Fig. 16 are performed. On the other hand, in the second display control, if the information processing unit 72A determines in step S65 that pointing coordinates are not within the shared area SA, the process proceeds to step S68.

In step S68, in the communication processing unit 25B, the display control unit 73B controls the projector main body 31B so as to stop updating the display of the pointing image 42. In response to this, the projector main body 31B continues to display the pointing image 42 at the position where the pointing image 42 has been displayed when it has been determined that the pointing coordinates have not been within the shared area SA, and then the process is terminated.

As described above, in the fifth communication process in which the second display control is performed, the pointing image 42 is displayed as if stopped at an end of the document image 41A-1 while a fingertip of the user A is passing through the private area PA as described by referring to Fig. 15.

### <Sixth Communication Process>

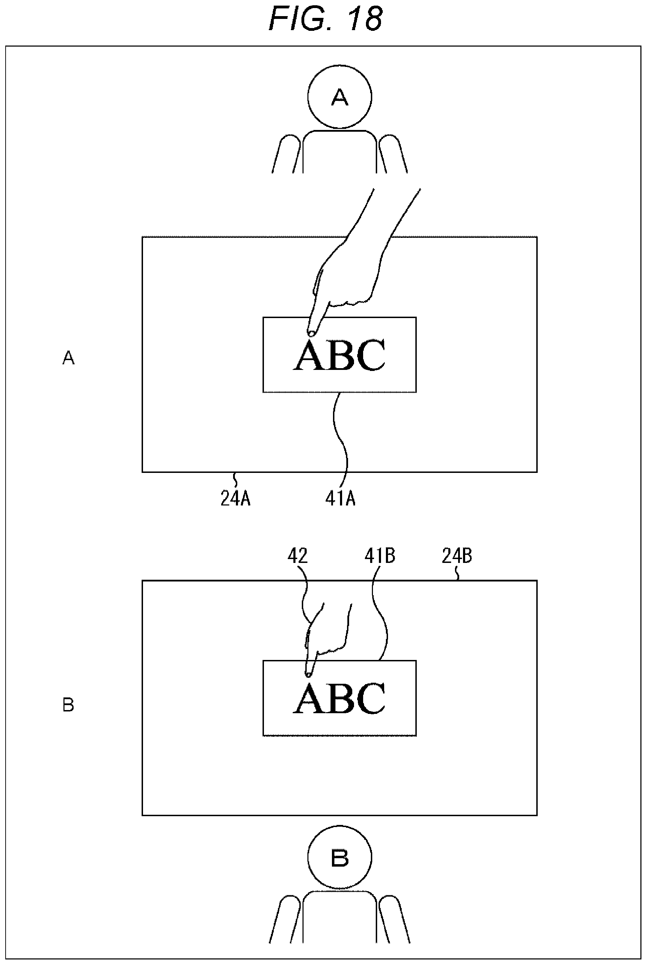

A sixth communication process executed in the remote communication system 11 will be described by referring to Figs. 18 to 27.

For example, in the sixth communication process, the document image 41 and the pointing image 42 are subjected to display control in first to third display cases that are assumed when the user A and the user B perform a collaborative work remotely. Here, the vertical direction as a reference when the document image 41 and the pointing image 42 are displayed on the desk-type screen 24 is set in such a manner that the far side as viewed from a user is facing upward and that the near side as viewed from the user is facing downward. Moreover, the vertical direction of the document image 41 is set depending on, for example, the direction of characters of the content, and the vertical direction of the pointing image 42 is set with the fingertip facing upward and the wrist facing downward. Note that the far side as viewed from a user refers to a side on which the display unit 23 is disposed as illustrated in Fig. 1.

For example, the first display case is applied when the user A gives an explanation while a document is positioned so as to face the user B upright, with a concept as if the user A faces the user B. That is, as illustrated in A of Fig. 18, on the communication terminal 13A side, the document image 41A is rotated by 180 degrees with respect to the vertical direction of the reference and displayed on the desk-type screen 24A so that the far side, as viewed from the user A, faces downward. Furthermore, as illustrated in B of Fig. 18, on the communication terminal 13B side, the document image 41B is displayed on the desk-type screen 24B so that the near side faces downward as viewed from the user B in the vertical direction of the reference.

Then, in the first display case, the pointing image 42 is displayed so that the far side as viewed from the user B is the wrist, with a concept as if the user A faces the user B. That is, as illustrated in B of Fig. 18, the pointing image 42 is rotated by 180 degrees with respect to the vertical direction of the reference and displayed on the desk-type screen 24B so that the far side as viewed from the user B is the wrist, and as if pointing is performed with the fingertip is directed toward the near side as viewed from user B. Therefore, the pointing image 42 is displayed with respect to the document image 41B in a similar manner to the direction and the motion in left and right of the user A's hand with respect to the document image 41A.

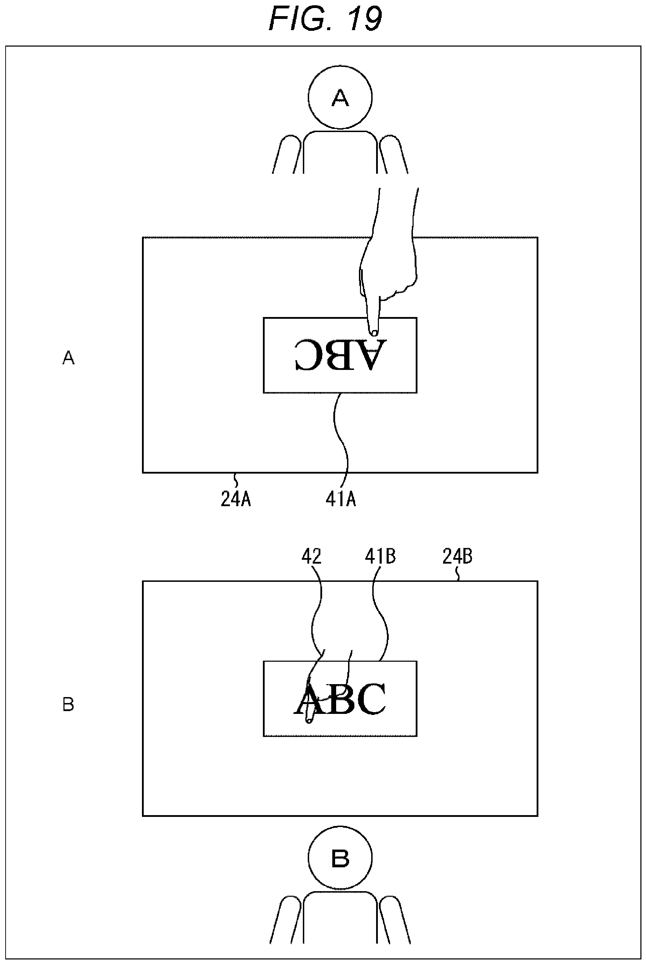

For example, the second display case is applied when the user A gives an explanation while a document is positioned so as to face the user A upright, with a concept as if the user A faces the user B. That is, as illustrated in A of Fig. 19, on the communication terminal 13A side, the document image 41A is displayed on the desk-type screen 24A so that the near side, as viewed from the user A, faces downward in the vertical direction of the reference. Furthermore, as illustrated in B of Fig. 19, on the communication terminal 13B side, the document image 41B is displayed on the desk-type screen 24B so that the near side faces downward as viewed from the user B in the vertical direction of the reference.

Then, in the second display case, the pointing image 42 is displayed so that the far side as viewed from the user B is the wrist, with a concept as if the user A faces the user B. That is, as illustrated in B of Fig. 19, the pointing image 42 is rotated by 180 degrees with respect to the vertical direction of the reference and displayed on the desk-type screen 24B so that the far side as viewed from the user B is the wrist, and as if pointing is performed with the fingertip directed toward the near side as viewed from user B. Therefore, the pointing image 42 is displayed with respect to the document image 41B so as to rotate by 180 degrees from the direction and the motion in left and right of the user A's hand with respect to the document image 41A.

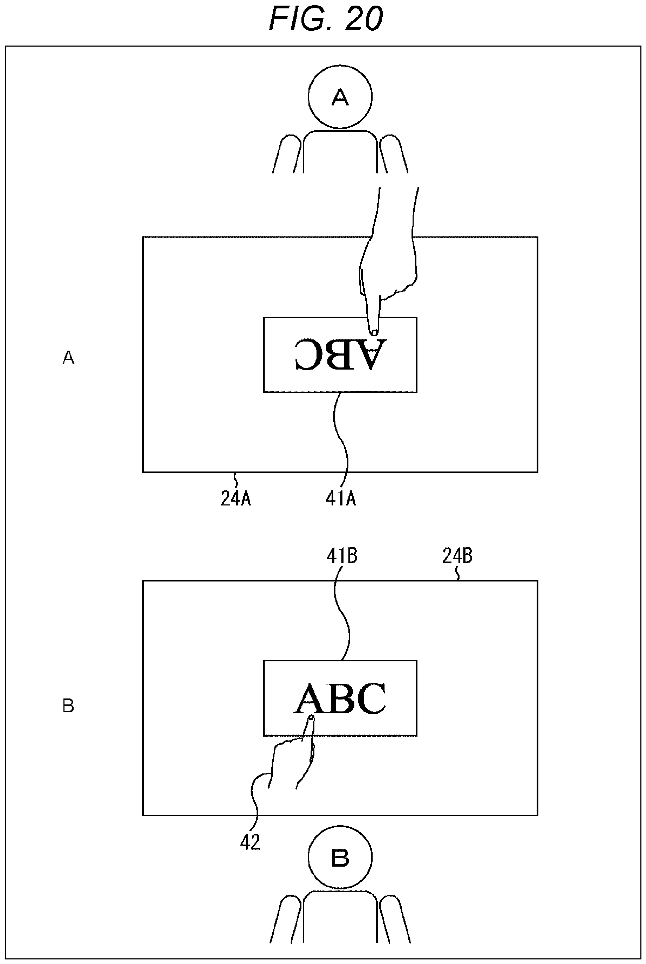

For example, the third display case is applied when the user A gives an explanation while a document is positioned so as to face the user A upright, with a concept as if the user A and the user B are side by side. That is, as illustrated in A of Fig. 20, on the communication terminal 13A side, the document image 41A is displayed on the desk-type screen 24A so that the near side, as viewed from the user A, faces downward in the vertical direction of the reference. Furthermore, as illustrated in B of Fig. 20, on the communication terminal 13B side, the document image 41B is displayed on the desk-type screen 24B so that the near side faces downward as viewed from the user B in the vertical direction of the reference.

Then, in the third display case, the pointing image 42 is displayed so that the near side as viewed from the user B is the wrist, with a concept as if the user A and the user B are side by side. That is, as illustrated in B of Fig. 19, the pointing image 42 is displayed on the desk-type screen 24B so that the near side as viewed from the user B is the wrist, and as if pointing is performed with the fingertip directed toward the far side as viewed from user B in the vertical direction of the reference. Therefore, the pointing image 42 is displayed with respect to the document image 41B in a similar manner to the direction and the motion in left and right of the user A's hand with respect to the document image 41A.

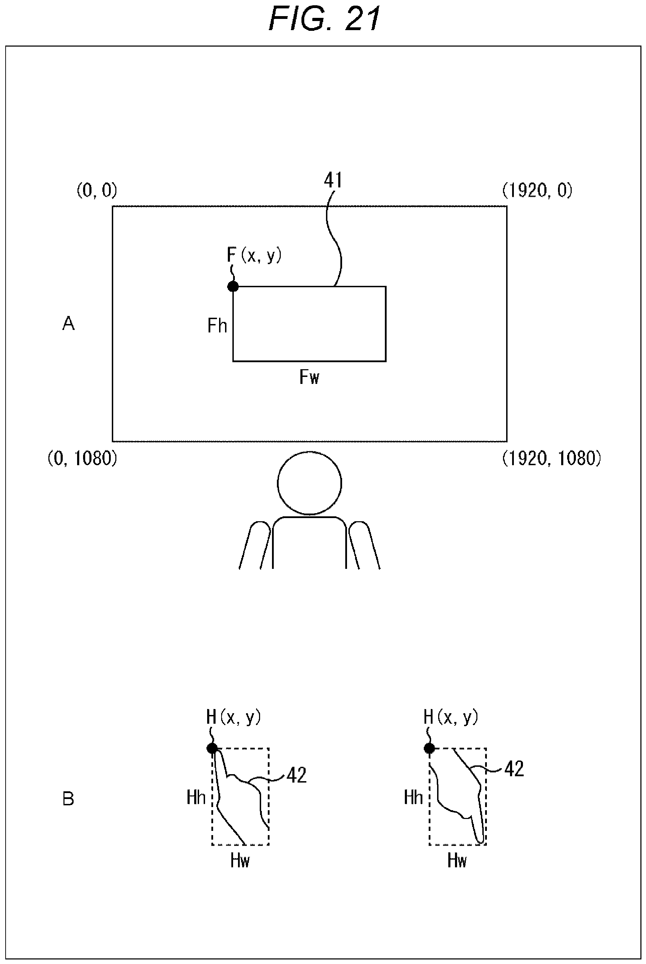

Here, by referring to Fig. 21, the initial information used in the sixth communication process will be described.

For example, acquired as the initial information are a display area size (width 1920, height 1080) indicating the size of a display area that the projector main body 31 can display on the desk-type screen 24, a document image display size (width Fw, height Fh) indicating the size of displaying the document image 41, and a pointing image display size (width Hw, height Hh) indicating the size of displaying the pointing image 42.

Moreover, as illustrated in A of Fig. 21, the display of the document image 41 and the pointing image 42 is controlled with the left end on the far side of a display area used as the origin (0,0) as viewed from a user. Furthermore, the document image reference coordinates F(x, y), which is the reference for displaying the document image 41, are set at the left end on the far side of the document image 41 as viewed from a user, regardless of the vertical direction of the document image 41.

Furthermore, as illustrated in B of Fig. 21, pointing image reference coordinates H(x, y), which are the reference for displaying the pointing image 42, are set at the left end on the far side of the pointing image 42 as viewed from a user regardless of the vertical direction of the pointing image 42. For example, illustrated on the left side of B of Fig. 21 is the pointing image 42 displayed so that the wrist faces downward in the vertical direction of the pointing image 42.

Meanwhile, illustrated on the right side of B of Fig. 21 is the pointing image 42 displayed so that the wrist faces upward so as to rotate by 180 degrees with respect to the vertical direction of the pointing image 42.

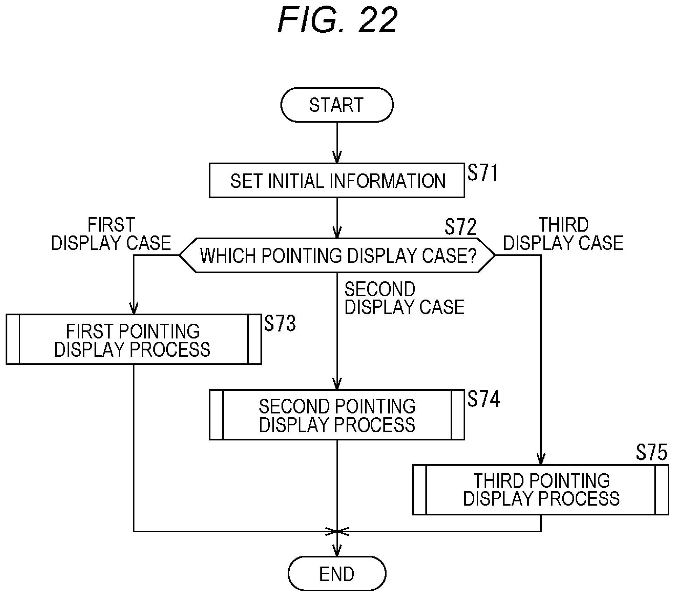

In Fig. 22, a flowchart explaining the sixth communication process is illustrated.

In step S71, the display control units 73A and 73B set the initial information as described by referring to Fig. 21 in the communication processing units 25A and 25B, respectively. That is, the display control unit 73A acquires the display area size (width 1920, height 1080), the document image display size (width Fw, height Fh), and the document image reference coordinates Fa(x, y) of the document image 41A. Meanwhile, the display control unit 73B acquires the display area size (width 1920, height 1080) and the pointing image display size (width Hw, height Hh).

In step S72, the display control units 73A and 73B determine which of the first and second display cases, described by referring to Figs. 18 to 20, a pointing display case is. For example, the pointing display case can be specified depending on how the user A gives an explanation or can be specified depending on how the user B wants to receive an explanation, and the determination is made in accordance with the specification.

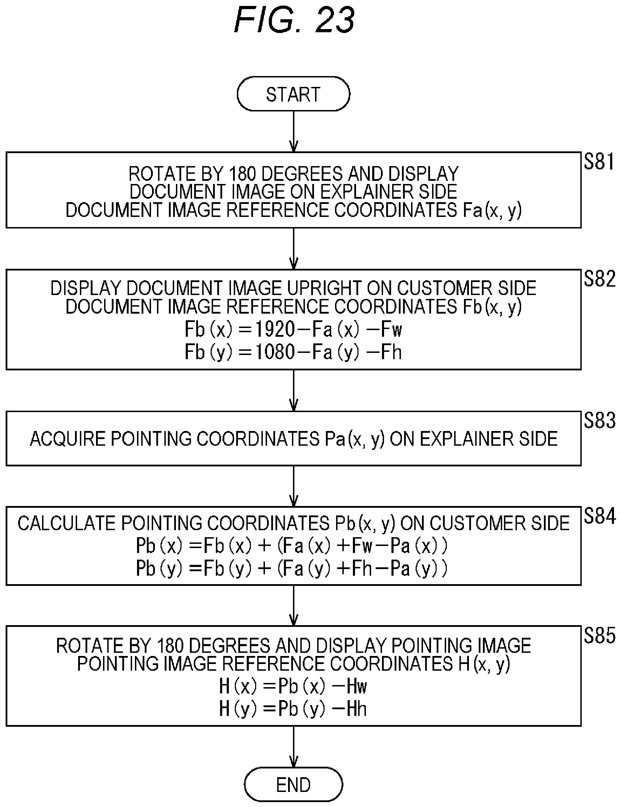

If the display control units 73A and 73B determine in step S72 that the pointing display case is the first display case, the process proceeds to step S73, and a first pointing display process, which will be described later by referring to a flowchart of Fig. 23, is performed. Then, the process is terminated.

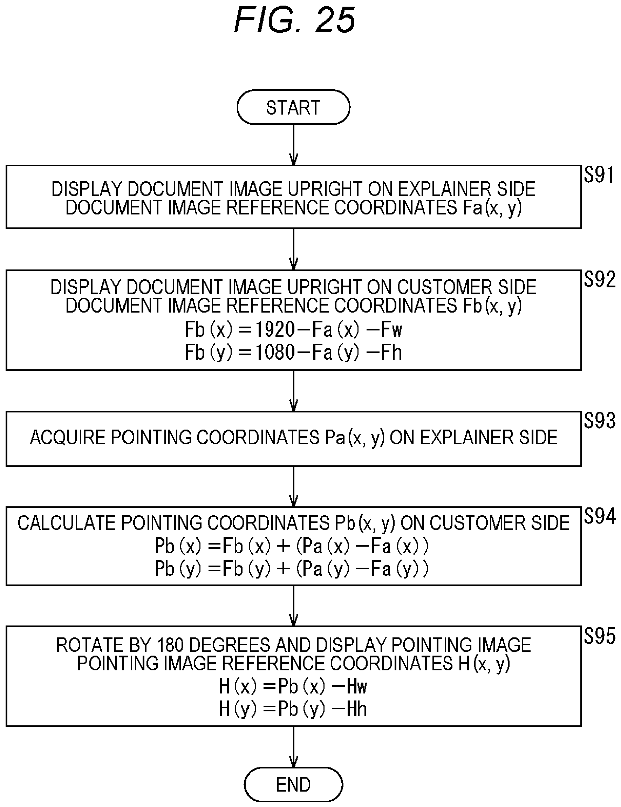

On the other hand, if the display control units 73A and 73B determine in step S72 that the pointing display case is the second display case, the process proceeds to step S74, and a second pointing display process, which will be described later by referring to a flowchart of Fig. 25, is performed. Then, the process is terminated.

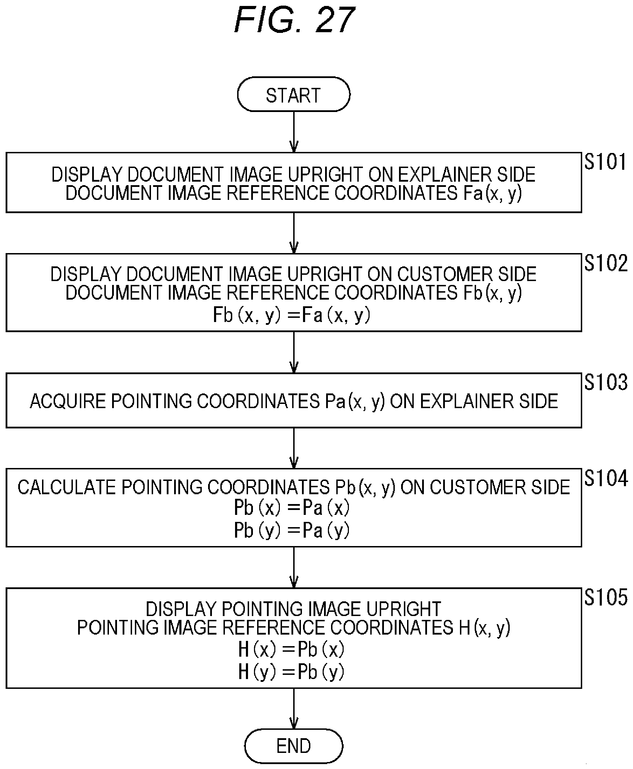

On the other hand, if the display control units 73A and 73B determine in step S72 that the pointing display case is the third display case, the process proceeds to step S75, and a third pointing display process, which will be described later by referring to a flowchart of Fig. 27, is performed. Then, the process is terminated.

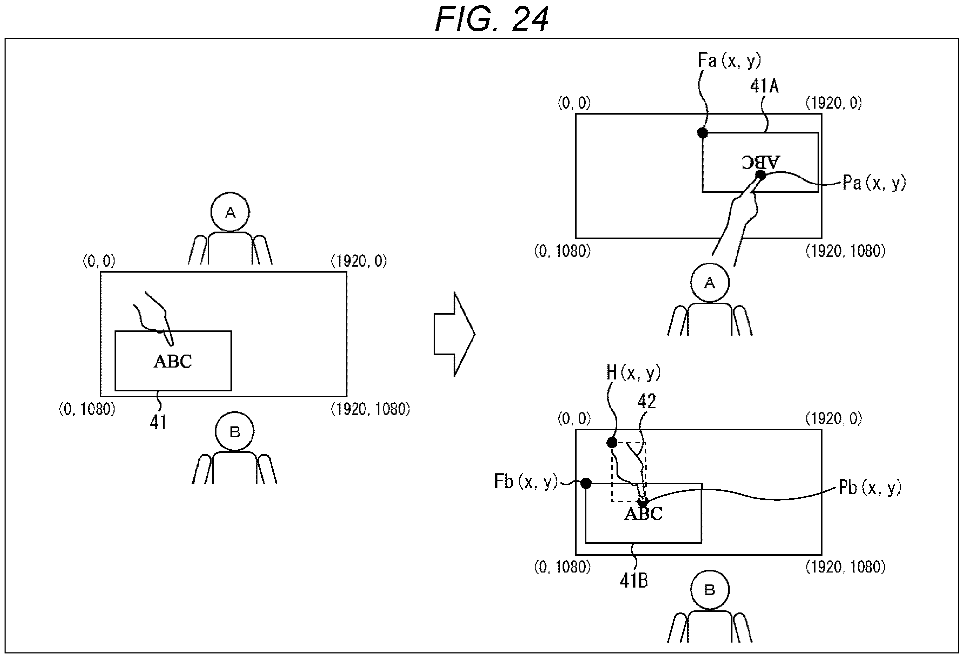

Fig. 23 is a flowchart explaining the first pointing display process performed in step S73 of Fig. 22. Furthermore, illustrated in Fig. 24 for explanation of the first pointing display process are a concept in which the user A and the user B face each other and display directions of the document image 41 and the pointing image 42.

In step S81, in the communication processing unit 25A, the display control unit 73A rotates by 180 degrees and displays the document image 41A on the explainer side.

That is, as illustrated on the left side of Fig. 24, when the user A positions a document so as to face the user B upright and gives an explanation in such a concept that the user A faces the user B, the document image 41A is rotated by 180 degrees with respect to the user A and displayed as illustrated on the upper right side of Fig. 24. At this point, the document image 41A is displayed so that the document image reference coordinates Fa(x, y) is on the left end on the far side with the left end on the far side of the display area used as the origin (0,0).

Then, the communication unit 55A transmits the document image reference coordinates Fa(x, y) and the document image display size of the document image 41A to the communication processing unit 25B.

In step S82, in the communication processing unit 25B, the display control unit 73B displays the document image 41B upright on the customer side.

At this point, as illustrated in the lower right side of Fig. 24, the document image 41B is displayed so as to face the user B upright so that, with the left end on the far side of the display area used as the origin (0,0), document image reference coordinates Fb(x, y), which correspond to the document image reference coordinates Fa(x, y) of the document image 41A, are positioned at the left end on the far side. Here, the document image reference coordinates Fb(x, y) of the document image 41B are derived from calculation formulas indicated in step S82 by using the display area size (width 1920, height 1080), the document image reference coordinates Fa(x, y), and the document image display size (width Fw, height Fh).

In step S83, in the communication processing unit 25A, the detection result acquiring unit 71 acquires the coordinates of the specified point specified by the user A by the pointing gesture as pointing coordinates Pa(x, y) on the explainer side. Then, the communication unit 55A transmits the pointing coordinates Pa(x, y) on the explainer side to the communication processing unit 25B.

In step S84, in the communication processing unit 25B, the display control unit 73B calculates pointing coordinates Pb(x, y) on the customer side. At this point, the pointing coordinates Pb(x, y) on the customer side are derived from calculation formulas indicated in step S84 by using the document image reference coordinates Fb(x, y), the document image reference coordinates Fa(x, y), the document image display size (width Fw, height Fh), and the pointing coordinates Pa(x, y).

As a result, the pointing coordinates Pb(x, y) for the document image 41B as illustrated in the lower right side of Fig. 24 are obtained so as to be a point that corresponds to the pointing coordinates Pa(x, y) for the document image 41A as illustrated in the upper right side of Fig. 24.

In step S85, in the communication processing unit 25B, the display control unit 73B rotates by 180 degrees and displays the pointing image 42. At this point, as described by referring to B of Fig. 21, the pointing image reference coordinates H(x, y) are set at the left end on the far side of the pointing image 42 as viewed from a user regardless of the vertical direction of the pointing image 42. Therefore, in order to rotate by 180 degrees and thereby display the pointing image 42, the pointing image reference coordinates H(x, y) are derived from calculation formulas indicated in step S85 by using the pointing coordinates Pb(x, y) and the pointing image display size (width Hw, height Hh).

As a result, as illustrated in the lower right side of Fig. 24, the pointing image 42 is displayed so as to point to the pointing coordinates Pb(x, y) so that the far side is the wrist as viewed from the user B.

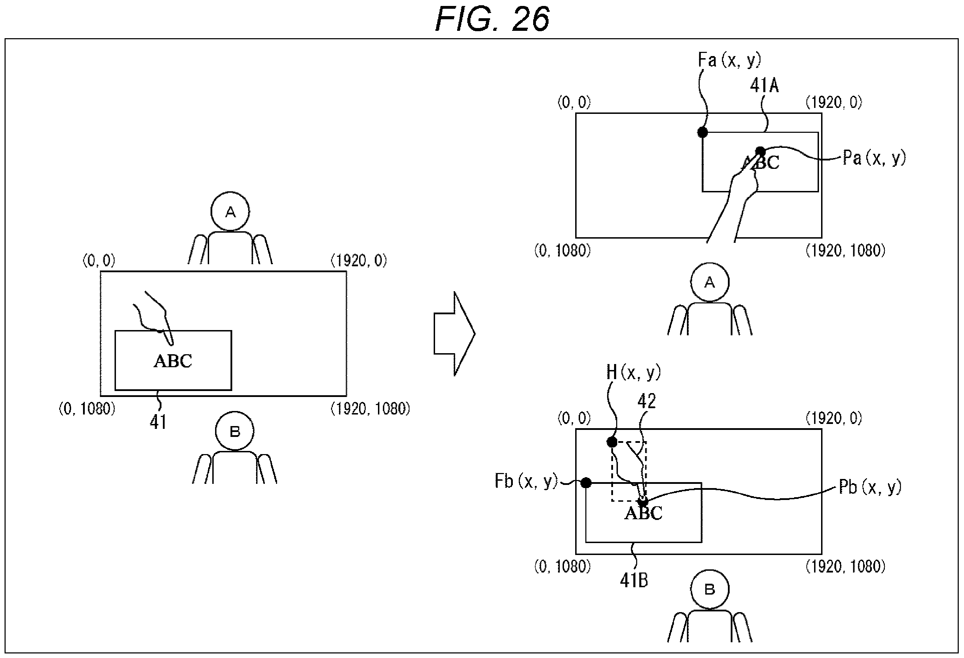

Fig. 25 is a flowchart explaining the second pointing display process performed in step S74 of Fig. 22. Furthermore, illustrated in Fig. 26 for explanation of the second pointing display process are a concept in which the user A and the user B face each other and display directions of the document image 41 and the pointing image 42.

In step S91, in the communication processing unit 25A, the display control unit 73A displays the document image 41A upright on the explainer side.

That is, as illustrated on the left side of Fig. 26, the user A positions a document so as to face the user B upright and gives an explanation in such a concept that the user A faces the user B; however, the document image 41A is displayed upright with respect to the user A as illustrated on the upper right side of Fig. 26. At this point, the document image 41A is displayed so that the document image reference coordinates Fa(x, y) is on the left end on the far side with the left end on the far side of the display area used as the origin (0,0).

Then, the communication unit 55A transmits the document image reference coordinates Fa(x, y) and the document image display size of the document image 41A to the communication processing unit 25B.

In step S92, in the communication processing unit 25B, the display control unit 73B displays the document image 41B upright on the customer side.

At this point, as illustrated in the lower right side of Fig. 26, the document image 41B is displayed so as to face the user B upright so that, with the left end on the far side of the display area used as the origin (0,0), the document image reference coordinates Fb(x, y), which correspond to the document image reference coordinates Fa(x, y) of the document image 41A, are positioned at the left end on the far side. Here, the document image reference coordinates Fb(x, y) of the document image 41B are derived from calculation formulas indicated in step S92 by using the display area size (width 1920, height 1080), the document image reference coordinates Fa(x, y), and the document image display size (width Fw, height Fh).

In step S93, in the communication processing unit 25A, the detection result acquiring unit 71 acquires the coordinates of the specified point specified by the user A by the pointing gesture as pointing coordinates Pa(x, y) on the explainer side. Then, the communication unit 55A transmits the pointing coordinates Pa(x, y) on the explainer side to the communication processing unit 25B.

In step S94, in the communication processing unit 25B, the display control unit 73B calculates the pointing coordinates Pb(x, y) on the customer side. At this point, the pointing coordinates Pb(x, y) on the customer side are derived from calculation formulas indicated in step S94 by using the document image reference coordinates Fb(x, y), the document image reference coordinates Fa(x, y), and the pointing coordinates Pa(x, y).

As a result, the pointing coordinates Pb(x, y) for the document image 41B as illustrated in the lower right side of Fig. 26 are obtained so as to be a point that corresponds to the pointing coordinates Pa(x, y) for the document image 41A as illustrated in the upper right side of Fig. 26.

In step S95, in the communication processing unit 25B, the display control unit 73B rotates by 180 degrees and displays the pointing image 42. At this point, as described by referring to B of Fig. 21, the pointing image reference coordinates H(x, y) are set at the left end on the far side of the pointing image 42 as viewed from a user regardless of the vertical direction of the pointing image 42. Therefore, in order to rotate by 180 degrees and thereby display the pointing image 42, the pointing image reference coordinates H(x, y) are derived from calculation formulas indicated in step S95 by using the pointing coordinates Pb(x, y) and the pointing image display size (width Hw, height Hh).

As a result, as illustrated in the lower right side of Fig. 26, the pointing image 42 is displayed so as to point to the pointing coordinates Pb(x, y) so that the far side is the wrist as viewed from the user B.

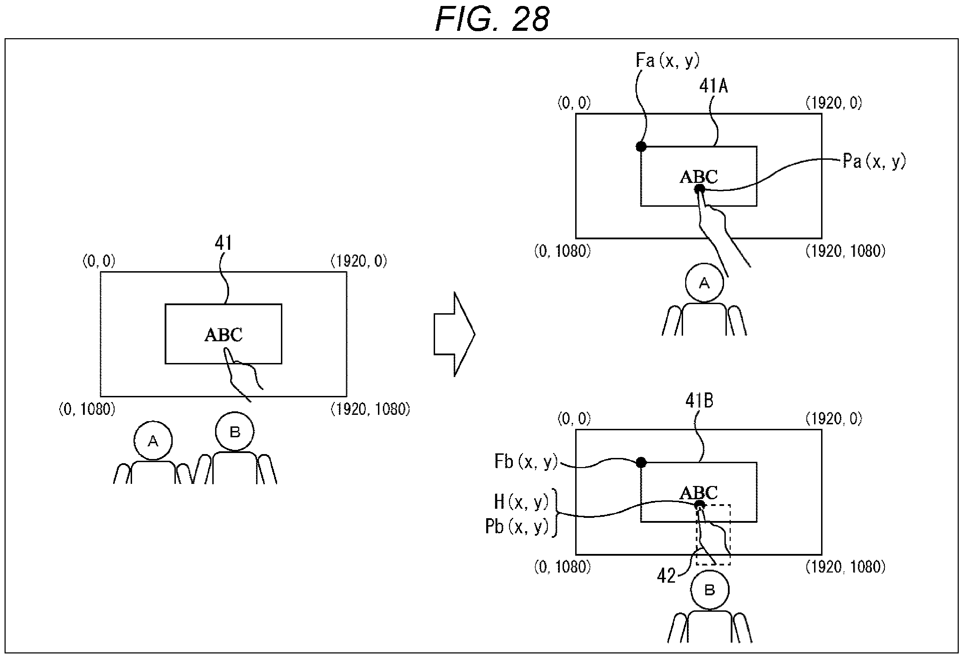

Fig. 27 is a flowchart explaining the third pointing display process performed in step S75 of Fig. 22. Furthermore, illustrated in Fig. 28 for explanation of the third pointing display process are a concept in which the user A and the user B are side by side and display directions of the document image 41 and the pointing image 42.

In step S101, in the communication processing unit 25A, the display control unit 73A displays the document image 41A upright on the explainer side.

That is, as illustrated on the left side of Fig. 28, the user A positions a document so as to face the user A upright and gives an explanation in such a concept that the user A and the user B are side by side, and the document image 41A is displayed upright with respect to the user A as illustrated on the upper right side of Fig. 28. At this point, the document image 41A is displayed so that the document image reference coordinates Fa(x, y) is on the left end on the far side with the left end on the far side of the display area used as the origin (0,0).

Then, the communication unit 55A transmits the document image reference coordinates Fa(x, y) and the document image display size of the document image 41A to the communication processing unit 25B.

In step S102, in the communication processing unit 25B, the display control unit 73B displays the document image 41B upright on the customer side.

At this point, as illustrated in the lower right side of Fig. 28, the document image 41B is displayed so as to face the user B upright so that, with the left end on the far side of the display area used as the origin (0,0), the document image reference coordinates Fb(x, y), which correspond to the document image reference coordinates Fa(x, y) of the document image 41A, are positioned at the left end on the far side. Here, the document image reference coordinates Fb(x, y) of the document image 41B matches the document image reference coordinates Fa(x, y) as expressed in the calculation formula indicated in step S102.

In step S103, in the communication processing unit 25A, the detection result acquiring unit 71 acquires the coordinates of the specified point specified by the user A by the pointing gesture as pointing coordinates Pa(x, y) on the explainer side. Then, the communication unit 55A transmits the pointing coordinates Pa(x, y) on the explainer side to the communication processing unit 25B.

In step S104, in the communication processing unit 25B, the display control unit 73B calculates the pointing coordinates Pb(x, y) on the customer side. At this point, the pointing coordinates Pb(x, y) on the customer side matches the pointing coordinates Pa(x, y) as expressed in the calculation formula indicated in step S104.

That is, the pointing coordinates Pa(x, y) for the document image 41A as illustrated in the upper right side of Fig. 28 match the pointing coordinates Pb(x, y) for the document image 41B as illustrated in the lower right side of Fig. 28.

In step S105, in the communication processing unit 25B, the display control unit 73B displays the pointing image 42 upright. Therefore, the pointing image reference coordinates H(x, y) matches the pointing coordinates Pb(x, y) as expressed in the calculation formula indicated in step S105.

As a result, as illustrated in the lower right side of Fig. 28, the pointing image 42 is displayed so as to point to the pointing coordinates Pb(x, y) so that the near side is the wrist as viewed from the user B.

As described above, in the sixth communication process, the pointing image 42 can be displayed with such a concept that the user A is facing the user B or that the user A and the user B are side by side.

### <Seventh Communication Process>

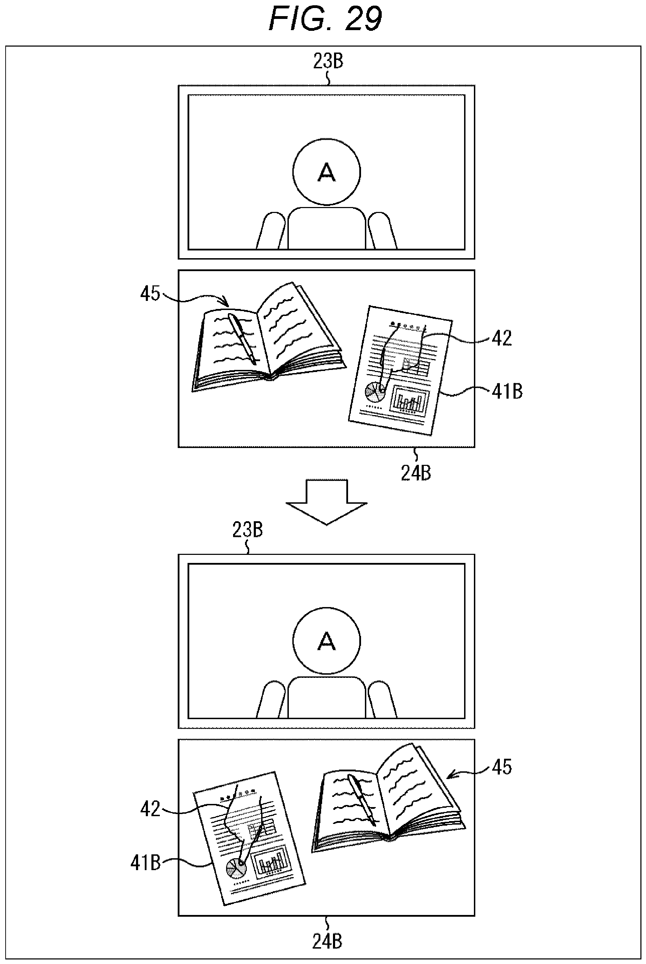

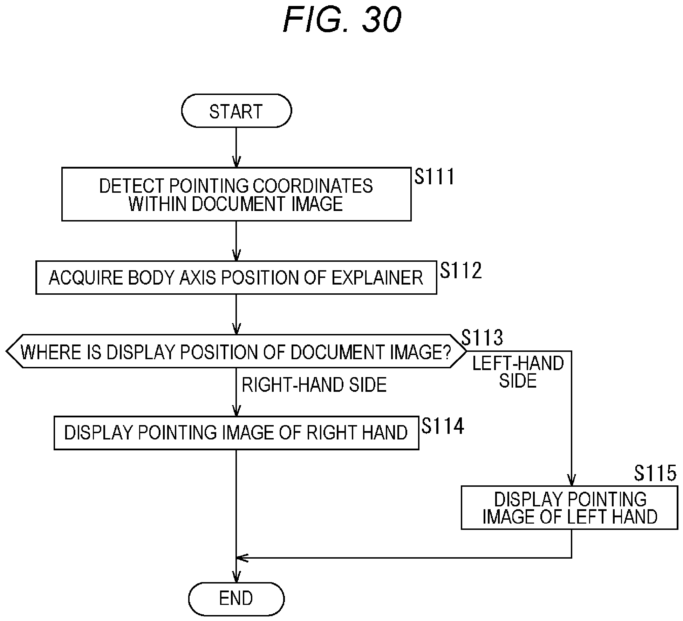

A seventh communication process executed in the remote communication system 11 will be described by referring to Figs. 29 and 30.

Illustrated in Fig. 29 is an exemplary situation in the display unit 23B and the desk-type screen 24B on the user B side, who is a customer.

For example, in the seventh communication process, as in the fourth communication process described by referring to Fig. 11, the document image 41B is displayed so as not to overlap the object 45 depending on the object 45 placed on the desk-type screen 24B. At this point, in the seventh communication process, a right hand or a left hand is used properly for the pointing image 42 depending on the display position of the document image 41B with respect to the user A who is displayed on the display unit 23B.

That is, as illustrated on the upper side of Fig. 29, when the document image 41B is positioned on the left side as viewed from the user A side, the pointing image 42 of a left hand is displayed. Then, as illustrated on the lower side of Fig. 29, when the document image 41B is positioned on the right side as viewed from the user A side, display control is performed so that the pointing image 42 of a right hand is displayed.

In this manner, in the remote communication system 11, either one of the pointing image 42 of the right hand and the pointing image 42 of the left hand is displayed depending on which side the document image 41B is displayed with respect to the body axis position of the user A displayed on the display unit 23B.

In Fig. 30, a flowchart explaining the seventh communication process is illustrated.

For example, after the process of step S46 in Fig. 12 is performed, the processing is started, and in step S111, in the communication processing unit 25B, the information processing unit 72B detects pointing coordinates in the document image 41B after the display of the document image 41B has been adjusted.

In step S112, the information processing unit 72B acquires the body axis position of the user A captured in an image by performing image recognition on the image displayed on the display unit 23 in accordance with the display control by the display control unit 73B.

In step S113, the information processing unit 72B determines which of the right-hand side and the left-hand side, as viewed from the display unit 23B side, the display position of the document image 41B is positioned with respect to the body axis position of the user A acquired in step S112.

If the information processing unit 72B determines in step S113 that the display position of the document image 41B with respect to the body axis position of the user A is on the right-hand side, the process proceeds to step S114. In step S114, the display control unit 73B controls the projector main body 31B so as to display the pointing image 42 of the right hand in accordance with the pointing coordinates detected in step S111. In response to this, the projector main body 31B displays the pointing image 42 of the right hand on the desk-type screen 24B so as to point to the pointing coordinates in the document image 41B, and then the process is terminated.

On the other hand, if the information processing unit 72B determines in step S113 that the display position of the document image 41B with respect to the body axis position of user A is on the left-hand side, the process proceeds to step S115. In step S115, the display control unit 73B controls the projector main body 31B so as to display the pointing image 42 of the left hand in accordance with the pointing coordinates detected in step S111. In response to this, the projector main body 31B displays the pointing image 42 of the left hand on the desk-type screen 24B so as to point to the pointing coordinates in the document image 41B, and then the process is terminated.

As described above, in the seventh communication process, it is possible to avoid generating a sense of incompatibility with the pointing by the user A by switching the display between the pointing image 42 of the right hand and the pointing image 42 of the left hand depending on the position of the document image 41B.

### <Eighth Communication Process>

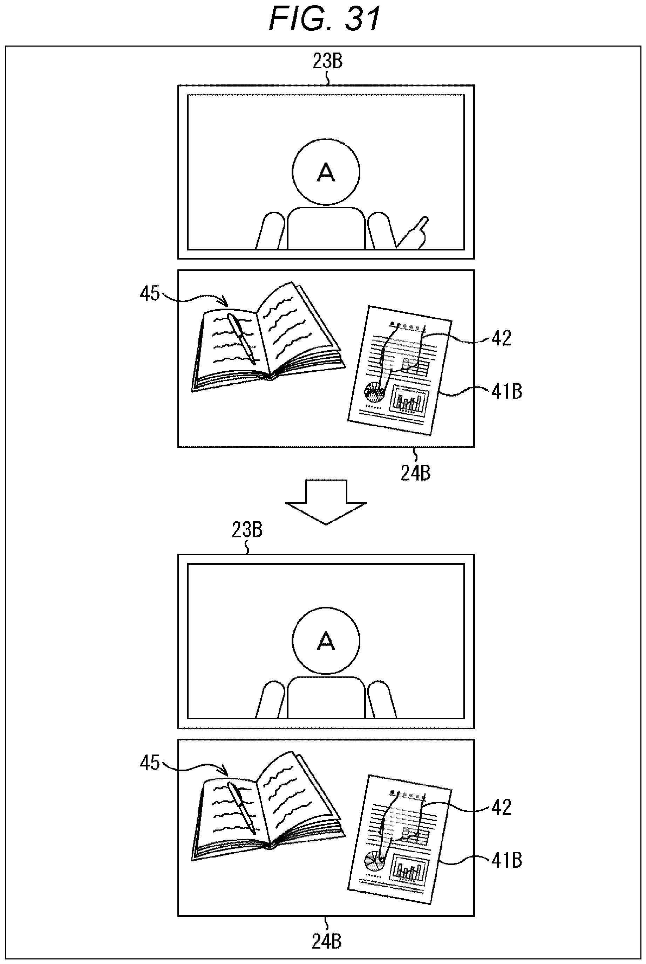

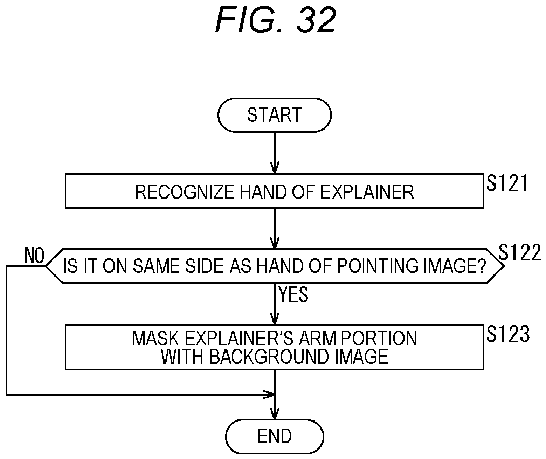

An eighth communication process executed in the remote communication system 11 will be described by referring to Figs. 31 and 32.

Illustrated in Fig. 31 is an exemplary situation in the display unit 23B and the desk-type screen 24B on the user B side, who is a customer.

For example, in the eighth communication process, as in the seventh communication process described by referring to Fig. 29, a right hand or a left hand is used properly for the pointing image 42 depending on the display position of the document image 41B with respect to the user A who is displayed on the display unit 23B. At this point, for example, in a situation where the user A is pointing at the document image 41A with the right hand, and the user's left hand is displayed on the display unit 23B, and when the display position of the document image 41B is on the left side of the user A, the pointing image 42 of the left hand is displayed on the desk-type screen 24B.

That is, as illustrated on the upper side of Fig. 31, although the left hand of the user A is displayed on the display unit 23B, the pointing image 42 of the left hand is displayed on the desk-type screen 24B. Therefore, in this case, by performing display control such that the left hand of the user A is masked, it is possible to hide the left hand of the user on the display unit 23B when the pointing image 42 of the left hand is displayed on the desk-type screen 24B as illustrated in the lower side of Fig. 31.

In this manner, in the remote communication system 11, displaying the hand of the user A is avoided when the pointing image 42 of a hand on the same side as the hand of the user A, which is displayed on the display unit 23B, is displayed on the desk-type screen 24B.

In Fig. 32, a flowchart explaining the eighth communication process is illustrated.

For example, after the process of step S114 or S115 of Fig. 30 is performed, the processing is started, and in step S121, the information processing unit 72B recognizes the hand of the user A captured in an image by performing image recognition on the image displayed on the display unit 23 in accordance with the display control by the display control unit 73B.

In step S122, the information processing unit 72B determines whether or not the hand of user A recognized in step S121 is on the same side as the hand of the pointing image 42 displayed on the desk-type screen 24B. For example, when a hand of user A recognized in step S121 is the right hand, and the pointing image 42 of the right hand is displayed in step S114 of Fig. 30, the information processing unit 72B determines that those hands are on the same side. On the contrary, when a hand of user A recognized in step S121 is the right hand, and the pointing image 42 of the left hand is displayed in step S115 of Fig. 30, the information processing unit 72B determines that those hands are not on the same side. Note that a similar determination can be made also when the hand of user A recognized in step S121 is the left hand.

If the information processing unit 72B determines in step S122 that the hand of user A recognized in step S121 is on the same side as the hand of the pointing image 42, the process proceeds to step S123. In step S123, the display control unit 73B controls the display unit 23B so that the arm portion of the user A captured in the image is masked with a background image. In response to this, the display unit 23B masks the arm portion of the user A captured in the image with the background image and hides the arm portion of the user A.

After the process of step S123, or if the information processing unit 72B determines in step S122 that the hand of user A recognized in step S121 is not on the same side as the hand of the pointing image 42, the process is terminated.

As described above, in the eighth communication process, when the hand of the user A displayed on the display unit 23B and the hand of the pointing image 42 are on the same side, it is possible to avoid generating a sense of incompatibility with the conflict of hands of the same side by hiding the hand of the user A.

Then, in the remote communication system 11, by performing the first to eighth communication processes described above, it is possible to provide a better user experience to both the user A who is the explainer and the user B who is the customer.

### <Second Configuration Example of Remote Communication System>

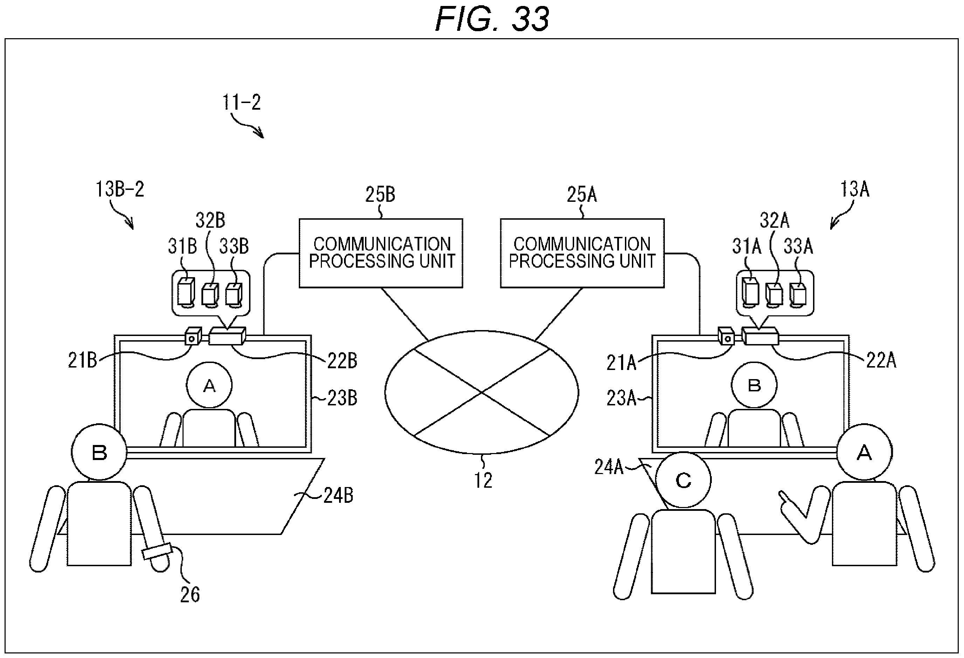

Fig. 33 is a block diagram illustrating a configuration example of a second embodiment of a remote communication system to which the present technology is applied. Note that, in a remote communication system 11-2 illustrated in Fig. 33, the same symbol is given to a component that is in common with the remote communication system 11 in Fig. 1, and detailed description thereof will be omitted.

That is, in the remote communication system 11-2, communication terminals 13A and 13B-2 are connected via a network 12 as in the remote communication system 11 of Fig. 1. Meanwhile, the remote communication system 11-2 is different from the remote communication system 11 in Fig. 1 in that the communication terminal 13B-2 includes a biosensor 26.

The biosensor 26 includes, for example, a heart rate meter or the like, senses the heart rate or the like of a user B, and supplies the sensing signal to a communication processing unit 25B. Then, in the communication processing unit 25B, a detection result acquiring unit 71B (see Fig. 2) detects biometric information of the user B on the basis of the sensing signal supplied from the biosensor 26.

Note that, as the biometric information, in addition to the heart rate of the user B, for example, the amount of sweating of the user B, the line-of-sight of the user B, the brain wave of the user B, or the complexion of the user B may be used.

Therefore, in the remote communication system 11-2, for example, the display of an image capturing a user A, which is displayed on the user B side, can be adjusted on the basis of the biometric information of the user B.

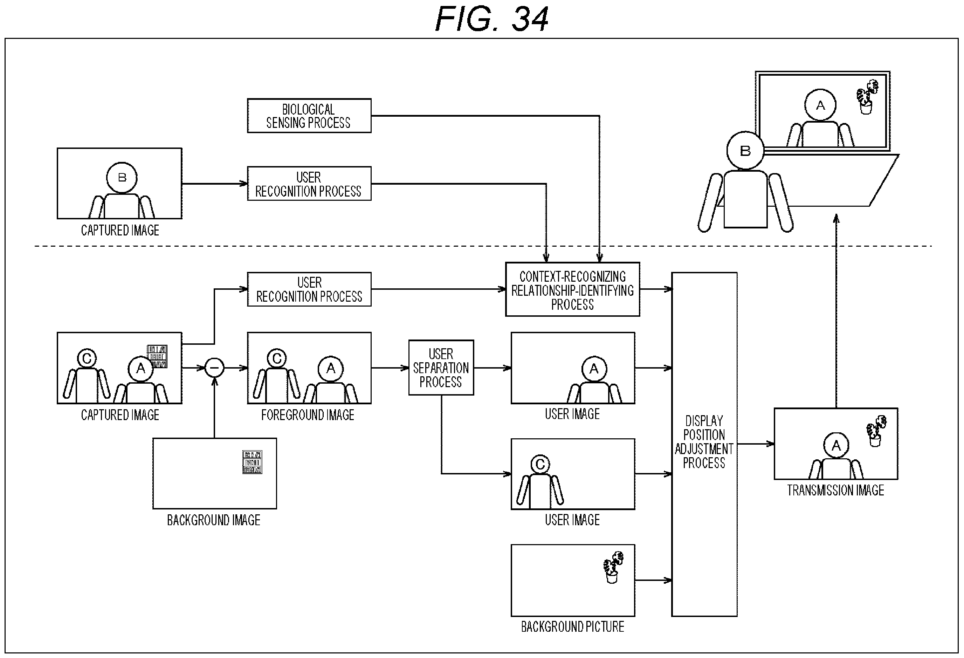

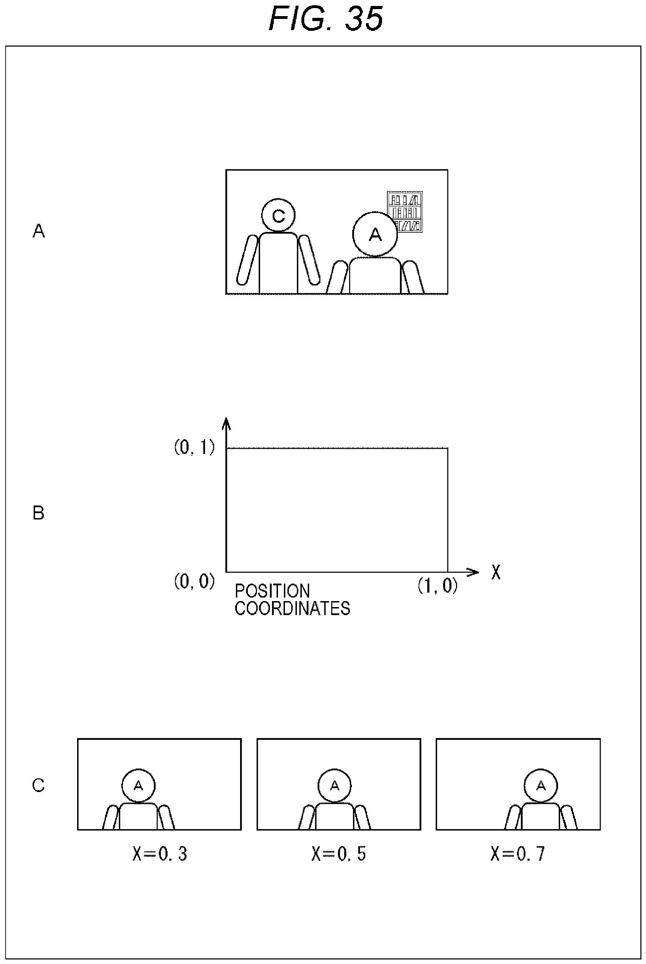

Here, an outline of an example of a communication process performed in the remote communication system 11-2 will be described by referring to Figs. 34 and 35.

In Fig. 34, the process performed by the communication terminal 13A is illustrated below a broken line, and the process performed by the communication terminal 13B is illustrated above the broken line.

For example, on the communication terminal 13B side, a biological sensing process for acquiring the biometric information of the user B is performed on the basis of a sensing signal acquired as a result of sensing the user B by the biosensor 26. In the biological sensing process, the detection result acquiring unit 71B acquires biometric information such as the pulse speed or the sweating state of the user B as a detection result, and the biometric information of the user B is transmitted to the communication terminal 13A via the communication unit 55B.

Furthermore, on the communication terminal 13B side, a user recognition process is performed on a captured image captured by a camera 21B. For example, in the user recognition process, the information processing unit 72B recognizes the user B captured in the captured image and acquires the display position where the user B is displayed in the captured image, and the display position of user B is transmitted to the communication terminal 13A via the communication unit 55B.

Meanwhile, on the communication terminal 13A side, the information processing unit 72A subtracts the background image having been acquired in advance and stored in a storage unit 54A from the captured image captured by the camera 21A, and thereby acquires an area where the user A and a user C are captured as a foreground image. Furthermore, the information processing unit 72A recognizes every user, performs a user separation process for separating the users from the foreground image, and thereby acquires a user image in which the user A is captured and a user image in which the user C is captured.

Furthermore, on the communication terminal 13A side, an information processing unit 72A performs a user recognition process on a captured image captured by a camera 21A. For example, the storage unit 54A stores a database in which face information of users who participate in remote communication is registered, and in a case where the user A is registered as an explainer, the information processing unit 72A acquires a user recognition result in which the user A captured in the captured image is determined as an explainer by performing the match based on the database. At this point, the information processing unit 72A acquires a user recognition result that deems the user C, whose face information is not registered in the database, as a bystander.

Then, the information processing unit 72A recognizes the context of a plurality of users who is communicating on the basis of the biometric information and position information of the user B transmitted from the communication terminal 13B and the user recognition result by the user recognition process and performs a context-recognizing relationship-identifying process for specifying the relationship among the users.

In the context-recognizing relationship-identifying process, for example, the psychological state of the user B is analyzed on the basis of the biometric information of the user B, and it is determined whether or not the user B is nervous. Furthermore, in the context-recognizing relationship-identifying process, the relationship that user A is an explainer and user B is a customer is specified on the basis of the user recognition result, and it is further set not to display the user C on the user B side on the basis that the user C is a bystander. Then, in the context-recognizing relationship-identifying process, a position parameter X for adjustment of the display position of the user A that is displayed on the user B side is obtained on the basis of the relationship based on the user recognition result and the display position of the user B.

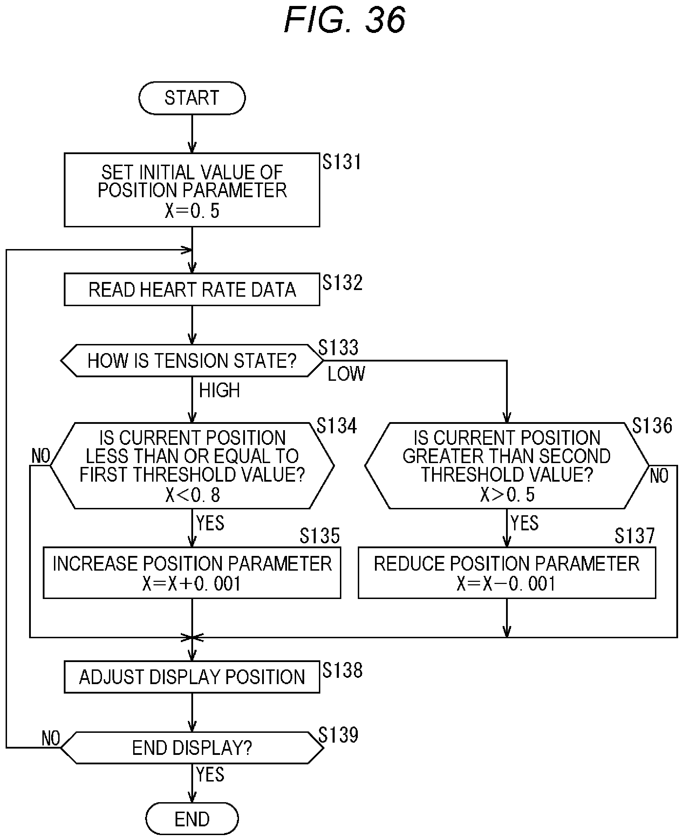

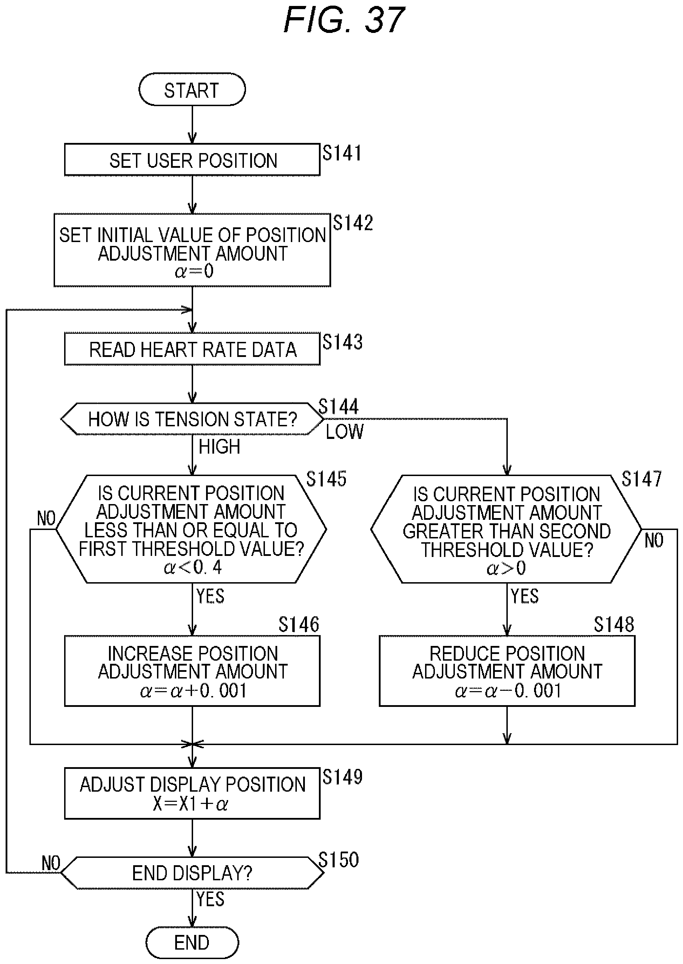

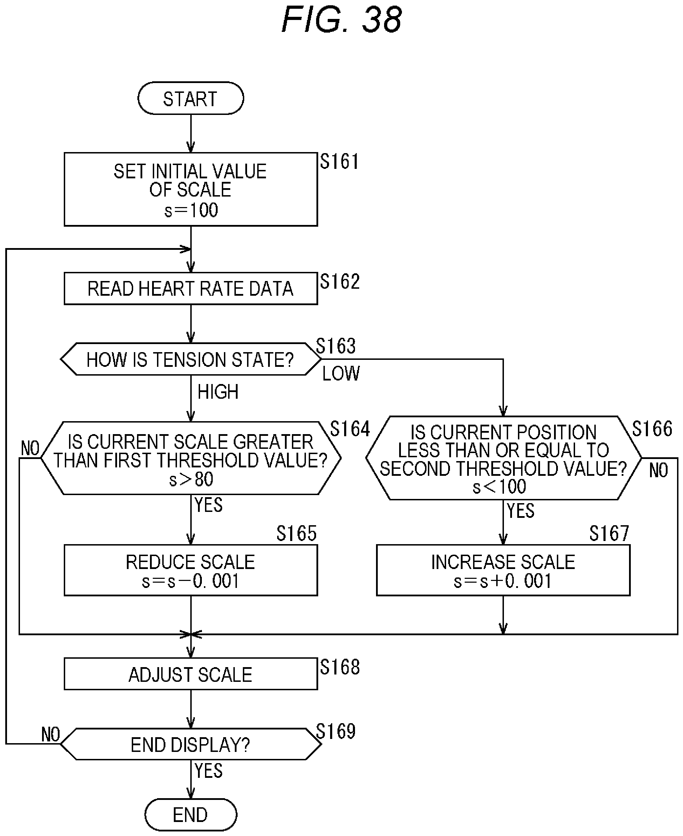

Furthermore, on the communication terminal 13A side, the information processing unit 72A performs a display position adjustment process for adjusting the display position of the user A that is displayed on the user B side. In the display position adjustment process, as will be described later by referring to Figs. 36 and 37, the user image of the user A is superimposed on a desired background picture read from the storage unit 54A so that the user image of user A is positioned at a display position based on the position parameter X. Furthermore, in the display position adjustment process, it is also possible to adjust the display size for displaying the user image of the user A, as will be described later by referring to Fig. 38.

Note that the background image that has been used to separate the foreground image may be used as the background picture. Meanwhile, the user image of user C, who is a bystander, is not used. Then, an image generated (reconstructed) by synthesizing the user image of the user A with the background picture by the display position adjustment process is transmitted to the communication terminal 13B as a transmission image via the communication unit 55A.

Here, the adjustment of the display position of the user A in the display position adjustment process will be described by referring to Fig. 35.

For example, as illustrated in A of Fig. 35, a captured image in which the user A and the user C are captured is acquired. Furthermore, as illustrated in B of Fig. 35, the position coordinate in the X-axis direction are set with the lower left end of the transmission image used as the origin (0,0). Then, as illustrated in C of Fig. 35, the display position of the user image of the user A is adjusted by increasing or decreasing the position parameter X. For example, when the position parameter X is 0.5, the user image of user A is superimposed on the center of the transmission image in the X-axis direction. Similarly, when the position parameter X is 0.3, the user image of user A is superimposed on the left side of the transmission image, and when the position parameter X is 0.7, the user image of user A is superimposed on the right side of the transmission image.

In the following, the adjustment of the display position using the position parameter X will be described on the basis of specific use cases.

For example, in a use case in which a sales representative (user A) addresses a customer (user B) that the user A has never met before using the remote communication system 11-2, the customer does not want to feel a sense of intimidation (similarly, the sales representative does not want to give a sense of intimidation) when the customer sees the sales representative displayed on the display unit 23B. On the other hand, when the sales representative looks at the customer displayed on the display unit 23B, there is a demand for carefully observing the customer's facial expression from the front and reading the customer's interest or a change in the willingness to buy.

Therefore, in such a use case, the initial value of the position parameter X for displaying the sales representative is set to 0.7, whereas the initial value of the position parameter X for displaying the customer is set to 0.5. In general, it is conceivable that displaying the sales representative in the center of the front gives the highest psychological intimidation to the customer and that the sense of intimidation is reduced by the amount the sales representative is shifted from the center. In addition, regarding the left-right direction in which the sales representative is shifted from the center, since humans generally tend to gaze from the upper left, the display is controlled so that the gaze becomes focused by setting the position parameter X so as to shift to the left side (that is, the left side of C in Fig. 35). On the other hand, by setting the position parameter X so as to shift it to the right side (that is, the right side of C in Fig. 35), such display control that a sense of intimidation is not distracting is achieved.

Alternatively, in a use case in which a doctor (user A) asks questions to a patient (user B), whom the doctor has never seen before, about the patient's condition by using the remote communication system 11-2, it is preferable not to give a sense of tension to the patient. Therefore, by attaching the biosensor 26 to the patient's arm and recognizing the tension state from the speed of the heartrate, for example, if the patient's tension state is high, display control is performed so that the doctor is gradually shifted to the right side and displayed in order to reduce the sense of intimidation. When the patient's tension state becomes low with this control, display control is performed so that the doctor is gradually shifted to the left side toward the center and displayed.

Furthermore, in the use cases as described above, in a case where the initial value of a scale parameter S, which indicates the display size of a user image, is set to 100%, and the tension state of the customer or the patient is high similarly to the display position of the user image, for example, display control is performed so as to reduce the user image to 80%. This can provide a psychological effect that reduces the sense of intimidation of the sales representative or the doctor.

As described above, in the remote communication system 11-2, it is possible to adjust the display position or the display size depending on the biometric information and to achieve better remote communication, for example, by reducing the sense of tension without giving a sense of intimidation.

In addition, the remote communication system 11-2 may transmit information indicating the change, only when there is a change in the psychological state of the user that is recognized from the biometric information, in order to reduce the communication load without transmitting raw data of the biometric information. For example, as the psychological state of a user that is recognized from biometric information, "on tension", "interested", "feeling stressed", or "feeling drowsy" is used, and information indicating a change in those is transmitted.

### <Ninth Communication Process>

In Fig. 36, a flowchart explaining a first process example of a ninth communication process is illustrated.

In step S131, in the communication processing unit 25A, the information processing unit 72A sets the initial value (for example, X = 0.5) of the position parameter X indicating the display position of the user image of the user A.

In step S132, in the communication processing unit 25B, the detection result acquiring unit 71B performs the biological sensing process, for example, reads the heartrate data of the user B sensed by the biosensor 26, and acquires the heartrate data as a detection result. Then, the communication unit 55B transmits the transmission detection result to the communication terminal 13A.

In step S133, the information processing unit 72A analyzes the psychological state on the basis of the heartrate data of user B transmitted in step S132 and determines whether the tension state of user B is high or low.

If the information processing unit 72A determines in step S133 that the tension state of user B is high, the process proceeds to step S134. In step S134, the information processing unit 72A determines whether or not the current position parameter X is less than or equal to a first position parameter threshold value (for example, 0.8) that is preset as the upper limit value.

If the information processing unit 72A determines in step S134 that the current position parameter X is less than or equal to the first position parameter threshold value, the process proceeds to step S135. In step S135, the information processing unit 72A increases the position parameter X by a predetermined increase amount (for example, X = X + 0.001), and then the process proceeds to step S138.

On the other hand, if the information processing unit 72A determines in step S134 that the current position parameter X is not less than or equal to the first position parameter threshold value, the process skips step S135 and proceeds to step S138. That is, in this case, since the current position parameter X has already reached the first position parameter threshold value, the position parameter X is not increased any further.

On the other hand, if the information processing unit 72A determines in step S133 that the tension state of user B is low, the process proceeds to step S136. In step S136, the information processing unit 72A determines whether or not the current position parameter X is greater than a second position parameter threshold value (for example, 0.5) that is preset as the lower limit value.

If the information processing unit 72A determines in step S136 that the current position parameter X is larger than the second position parameter threshold value, the process proceeds to step S137. In step S137, the information processing unit 72A reduces the position parameter X by a predetermined reduction amount (for example, X = X - 0.001), and then the process proceeds to step S138.

On the other hand, if the information processing unit 72A determines in step S136 that the current position parameter X is not less than or equal to the second position parameter threshold value, the process skips step S137 and proceeds to step S138. That is, in this case, since the current position parameter X has already reached the second position parameter threshold value, the position parameter X is not decreased any further.

In step S138, the information processing unit 72A adjusts the display position of the user image capturing the user A by using the position parameter X as the coordinate X in the X direction of the user image capturing the user A. Then, the information processing unit 72A generates a transmission image by superimposing the user image capturing the user A as a foreground of the background picture at the display position that has been adjusted. Then, the communication unit 55A transmits the transmission image to the communication terminal 13B, and the transmission image is displayed on the display unit 23B.

In step S139, the information processing unit 72A determines whether or not to end the display of the image on the communication terminal 13B side, and if it is determined not to end the display, the process returns to step S132, and similar processes are repeated thereafter.

On the other hand, if the information processing unit 72A determines to end the display in step S139, the process is terminated.

As described above, by applying the first process example of the ninth communication process to the use case in which the sales representative (user A) addresses to the customer (user B), as described above, for example, it is possible to achieve good remote communication while preventing the sales representative from giving a sense of intimidation to the customer.

Here, in the processes of the flowchart illustrated in Fig. 36, the initial display position for displaying the user A is set at the center of the display unit 23B (that is, the position parameter X = 0.5). On the other hand, for example, the initial display position of the user A may be set depending on the position of the user A captured in the captured image captured by the camera 21A.

In Fig. 37, a flowchart explaining a second process example of the ninth communication process is illustrated.

In step S141, in the communication processing unit 25A, the information processing unit 72A recognizes the position of the user A captured in the captured image captured by the camera 21A and sets a user position X1 as a display position of the user A, which serves as the reference.

In step S142, the information processing unit 72A sets the initial value of a position adjustment amount α (for example, α = 0) for adjusting the display position of the user A.

In steps S143 and S144, similar processes to those of steps S132 and S133 of Fig. 36 are performed, and if the information processing unit 72A determines in step S144 that the tension state of the user B is high, the process proceeds to step S145. In step S145, the information processing unit 72A determines whether or not the current position adjustment amount α is less than or equal to a first position adjustment amount threshold value (for example, 0.4) that is preset as an upper limit value.

If the information processing unit 72A determines in step S145 that the current position adjustment amount α is less than or equal to the first position adjustment amount threshold value, the process proceeds to step S146. In step S146, the information processing unit 72A increases the position adjustment amount α by a predetermined increase amount (for example, α = α + 0.001), and then the process proceeds to step S149.

On the other hand, if the information processing unit 72A determines in step S145 that the current position adjustment amount α is not less than or equal to the first position adjustment amount threshold value, the process skips step S146 and proceeds to step S149. That is, in this case, since the current position adjustment amount α has reached the first position adjustment amount threshold value, the position adjustment amount α is not increased any further.

On the other hand, if the information processing unit 72A determines in step S144 that the tension state of user B is low, the process proceeds to step S147. In step S147, the information processing unit 72A determines whether or not the current position adjustment amount α is greater than a second position adjustment amount threshold value (for example, 0) that is preset as a lower limit value.

If the information processing unit 72A determines in step S147 that the current position adjustment amount α is greater than the second position adjustment amount threshold value, the process proceeds to step S148. In step S148, the information processing unit 72A reduces the position adjustment amount α by a predetermined reduction amount (for example, α = α - 0.001), and then the process proceeds to step S149.

On the other hand, if the information processing unit 72A determines in step S147 that the current position adjustment amount α is not less than or equal to the second position adjustment amount threshold value, the process skips step S148 and proceeds to step S149. That is, in this case, since the current position adjustment amount α is at the second position adjustment amount threshold value, the position adjustment amount α is not reduced any further.

In step S149, the information processing unit 72A adjusts the coordinate X in the X direction of the user image capturing the user A (X1 + α) on the basis of the position adjustment amount α by using the user position X1 as the display position of the user A, which serves as a reference, and generates a transmission image by superimposing the user image capturing the user A as a foreground of a background picture at the display position that has been adjusted. Then, the communication unit 55A transmits the transmission image to the communication terminal 13B, and the transmission image is displayed on the display unit 23B.

In step S150, the information processing unit 72A determines whether or not to end the display of the image on the communication terminal 13B side, and if it is determined not to end the display, the process returns to step S143, and similar processes are repeated thereafter.

On the other hand, if the information processing unit 72A determines to end the display in step S150, the process is terminated.

As described above, by applying the second process example of the ninth communication process to the use case in which the doctor (user A) asks questions to the patient (user B) about the patient's condition as described above, for example, it is possible to achieve good remote communication while preventing the doctor from giving a sense of intimidation to the patient.

### <Tenth Communication Process>

In Fig. 38, a flowchart explaining a tenth communication process is illustrated.

In step S161, in the communication processing unit 25A, the information processing unit 72A sets the initial value (for example, S = 100%) of the scale parameter S representing the display size of the user image of the user A.

In steps S162 and S163, similar processes to those of steps S132 and S133 of Fig. 36 are performed, and if the information processing unit 72A determines in step S163 that the tension state of the user B is high, the process proceeds to step S164. In step S164, the information processing unit 72A determines whether or not the current scale parameter S is greater than a first scale parameter threshold value (for example, 80%) that is preset as the lower limit value.

If the information processing unit 72A determines in step S165 that the current scale parameter S is greater than the first scale parameter threshold value, the process proceeds to step S165. In step S165, the information processing unit 72A reduces the scale parameter S by a predetermined reduction amount (for example, S = S - 0.001), and then the process proceeds to step S168.

On the other hand, if the information processing unit 72A determines in step S164 that the current scale parameter S is not greater than the first scale parameter threshold value, the process skips step S165 and proceeds to step S168. That is, in this case, since the current scale parameter S has reached the first scale parameter threshold value, the scale parameter S is not reduced any further.

On the other hand, if the information processing unit 72A determines in step S163 that the tension state of user B is low, the process proceeds to step S166. In step S166, the information processing unit 72A determines whether or not the current scale parameter S is less than or equal to a second scale parameter threshold value (for example, 100%) that is preset as the upper limit value.

If the information processing unit 72A determines in step S166 that the current scale parameter S is less than or equal to the second scale parameter threshold value, the process proceeds to step S167. In step S167, the information processing unit 72A increases the scale parameter S by a predetermined increase amount (for example, S = S + 0.001), and then the process proceeds to step S168.

On the other hand, if the information processing unit 72A determines in step S166 that the current scale parameter S is not less than or equal to the second scale parameter threshold value, the process skips step S167 and proceeds to step S168. That is, in this case, since the current scale parameter S has reached the second scale parameter threshold value, the scale parameter S is not increased any further.

In step S168, the information processing unit 72A adjusts the display size for displaying the user image capturing the user A on the basis of the scale parameter S and generates a transmission image by superimposing the user image capturing the user A as a foreground of a background picture at the display size that has been adjusted. Then, the communication unit 55A transmits the transmission image to the communication terminal 13B, and the transmission image is displayed on the display unit 23B.

In step S169, the information processing unit 72A determines whether or not to end the display of the image on the communication terminal 13B side, and if it is determined not to end the display, the process returns to step S162, and similar processes are repeated thereafter.

On the other hand, if the information processing unit 72A determines to end the display in step S169, the process is terminated.

As described above, like the ninth communication process described above, the tenth communication process can be applied to a use case in which a sales representative (user A) addresses a customer (user B) or a use case in which a doctor (user A) asks questions to a patient (user B) about the patient's condition.

As described above, the remote communication system 11-2 can perform remote communication in an environment close to actual face-to-face communication and can achieve more natural communication. Furthermore, the remote communication system 11-2 can provide an intentional environment that cannot be achieved by actual face-to-face communication depending on the purpose of the communication and lead the communication, for example, by recognizing a tense state and preventing a sense of intimidation from being given.

### <Third Configuration Example of Remote Communication System>

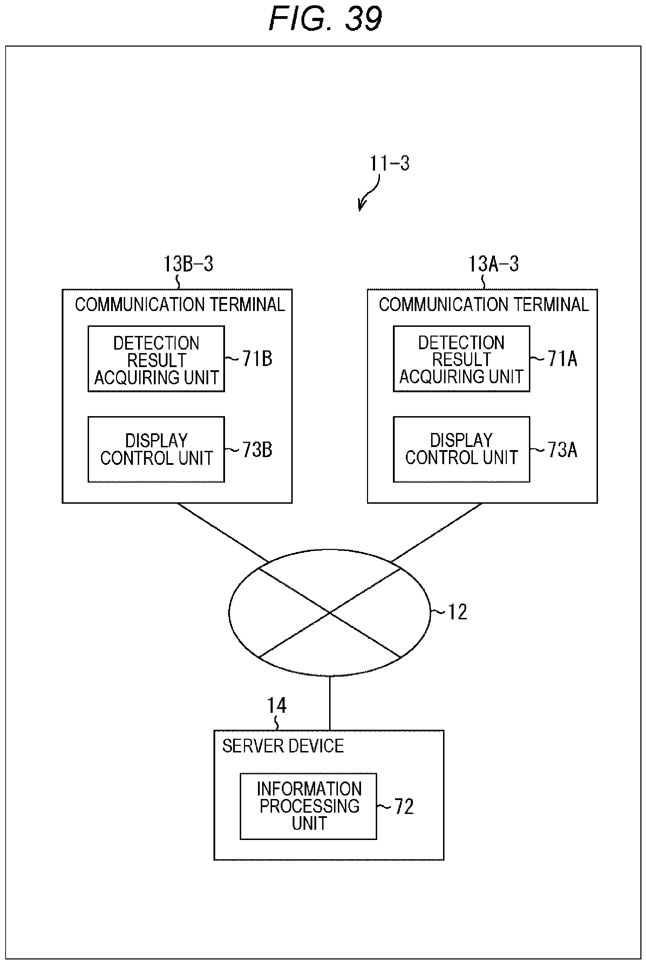

Fig. 39 is a block diagram illustrating a configuration example of a third embodiment of a remote communication system to which the present technology is applied. Note that, in a remote communication system 11-3 illustrated in Fig. 39, the same symbol is given to a component that is in common with the remote communication system 11 of Fig. 1, and detailed description thereof will be omitted.

That is, in the remote communication system 11-3, communication terminals 13A-3 and 13B-3 are connected via a network 12 as in the remote communication system 11 of Fig. 1. Furthermore, the communication terminal 13A-3 includes a detection result acquiring unit 71A and a display control unit 73A, and the communication terminal 13B-3 includes a detection result acquiring unit 71B and a display control unit 73B.

Meanwhile, the remote communication system 11-3 is different from the remote communication system 11 of Fig. 1 in that a server device 14 including the information processing unit 72 is connected to the network 12.

That is, in the remote communication system 11 of Fig. 1, the communication terminals 13A and 13B each have a detection result acquiring unit 71, an information processing unit 72, and a display control unit 73. Meanwhile, in the remote communication system 11-3, the server device 14 includes the information processing unit 72 and communicates with the communication terminals 13A-3 and 13B-3 via the network 12, and various processes executed by the information processing unit 72 as described above are performed via the network 12.

The remote communication system 11-3 having such a configuration can also provide a better user experience as in the remote communication system 11 of Fig. 1 and the remote communication system 11-2 of Fig. 1 of Fig. 33.

### <Exemplary Configuration of Computer>

Next, a series of processes (information processing method) described above can be performed by hardware or by software. In a case where the series of processes is executed by software, a program that implements the software is installed in a general-purpose computer or the like.

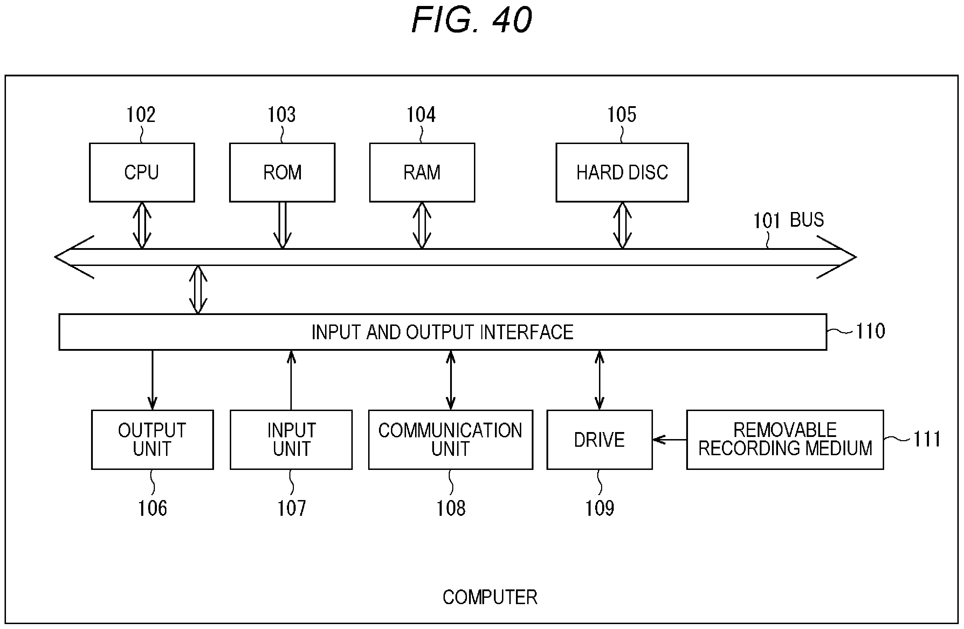

Fig. 40 is a block diagram illustrating a configuration example of an embodiment of a computer in which the program for executing the above-described series of processes is installed.

The program can be pre-recorded in a hard disk 105 or a ROM 103, as a recording medium built in a computer.

Alternatively, the program can be stored (recorded) in removable recording medium 111 that is driven by a drive 109. Such a removable recording medium 111 can be provided as so-called package software. Here, examples of the removable recording medium 111 include a flexible disk, a compact disc read only memory (CD-ROM), a magneto optical (MO) disk, a digital versatile disc (DVD), a magnetic disk, and a semiconductor memory.

Note that the program can be installed in the computer from the removable recording medium 111 as described above or can also be downloaded to the computer via a communication network or a broadcasting network and installed in the built-in hard disk 105. That is, for example, the program can be transferred wirelessly from a download site to a computer via an artificial satellite for digital satellite broadcasting or can be transferred to a computer by wire via a network such as a local area network (LAN) or the Internet.

The computer has a built-in central processing unit (CPU) 102, and the CPU 102 is connected with an input and output interface 110 via a bus 101.

When a command is input by a user, for example, by operation of an input unit 107 via the input and output interface 110, the CPU 102 executes a program stored in the read only memory (ROM) 103 accordingly. Alternatively, the CPU 102 loads the program stored in the hard disk 105 in a random access memory (RAM) 104 and executes it.

As a result, the CPU 102 performs the processes in accordance with the above-described flowchart or the processes performed by the configurations of the above-described block diagrams. Then, the CPU 102 outputs the process result from an output unit 106 or transmits the process result from a communication unit 108, for example, via the input and output interface 110 as necessary or further records the process result in the hard disk 105.

Note that the input unit 107 includes a keyboard, a mouse, a microphone, and the like. Meanwhile, the output unit 106 includes a liquid crystal display (LCD), a speaker, and the like.

Herein, processes performed by the computer in accordance with the program do not necessarily be performed in a time series along an order described as a flowchart. That is, processes performed by the computer in accordance with the program also include processes executed in parallel or separately (for example, parallel process or process for each object).

Moreover, the program may be processed by one computer (processor) or may be processed in a distributed manner by a plurality of computers. Furthermore, the program may be transferred to and executed by a distant computer.

Note that, herein, a system means a collection of a plurality of components (such as devices and modules (parts)) regardless of whether or not all the components are in the same housing. Therefore, a plurality of devices accommodated in separate housings and connected via a network as well as a single device in which a plurality of modules is accommodated in one housing are both a system.

Furthermore, for example, a configuration described as a single device (or a processing unit) may be divided and configured as a plurality of devices (or processing units). On the contrary, a configuration described above as a plurality of devices (or processing units) may be collectively configured as one device (or processing unit). In addition, of course, a configuration other than those described above may be added to a configuration of each device (or each processing unit). Furthermore, in a case where the configuration or the operation of a system as a whole is substantially the same, a part of the configuration of a device (or processing unit) may be included in the configuration of another device (or other processing unit).

In addition, for example, the present technology may employ cloud computing in which one function is processed by a plurality of devices in a shared and collaborative manner via a network.

Furthermore, for example, the above-described program can be executed in a desired device. In that case, it is only required that the device have necessary functions (functional blocks, etc.) and can acquire necessary information.

Moreover, for example, each of the steps described in the above flowcharts can be executed by a single device or by a plurality of devices in a shared manner. Furthermore, in a case where a plurality of processes is included in one step, the plurality of processes included in that one step can be executed by a single device or by a plurality of devices in a shared manner. In other words, a plurality of processes included in one step can be executed as a process of a plurality of steps. On the contrary, a process described as a plurality of steps can be collectively executed as one step.

Note that, regarding the program executed by a computer, processes of steps describing the program may be executed in a time series along the order described herein or may be executed in parallel or may be executed separately at a necessary timing such as when invocation is performed. That is, as long as there is no contradiction, the processes of the respective steps may be executed in an order different from the above-described order. Furthermore, the processes of the steps describing this program may be executed in parallel with processes of another program or may be executed in combination with processes of another program.

Note that the plurality of pieces of the present technology described herein can be each implemented independently and separately as long as there is no contradiction. It goes without saying that any ones of the plurality of pieces of the present technology can be used in combination. For example, some or all of the present technology described in any of the embodiments may be combined with some or all of the present technology described in another embodiment. In addition, some or all of any of any piece of the present technology described above can be implemented in combination with other technology not described above.

### <Exemplary Combinations of Configurations>

Note that the present technology can also employ the configurations as follows.
(1)
   An information processing device including:
   an information processing unit that performs an information process so that a presentation content presented on a side of one of at least two users is different from a presentation content on a side of another one of the users on the basis of a detection result obtained as a result of sensing one of the users when communication is performed by the users while viewing each other's images transmitted and received via a network.
(2)
   The information processing device according to item (1), further including:
   a detection result acquiring unit that acquires the detection result; and
   a display control unit that performs display control to display an image which is the presentation content in accordance with an information process by the information processing unit.
(3)
   The information processing device according to item (2),
   in which the detection result acquiring unit acquires a motion of a hand of the one of the users as the detection result,
   the information processing unit acquires the specified point when having recognized that the one of the users has performed a pointing gesture of specifying a predetermined specified point on the basis of the detection result, and
   the display control unit performs display control of displaying a pointing image pointing to the specified point on the side of the another one of the users.
(4)
   The information processing device according to item (3),
   in which a shared area for sharing display of the image with the side of the another one of the users is set on the side of the one of the users, and
   the information processing unit causes the display control unit to control the display of the pointing image when the specified point is within the shared area.
(5)
   The information processing device according to item (4),
   in which the shared area is set on the side of the one of the users so as to surround a document image that is shared with the side of the another one of the users therein,
   in a case where the information processing unit recognizes that the one of the users has performed a tap gesture of tapping a predetermined item of the document image on the basis of the detection result, the information processing unit acquires related information related to the item,
   the display control unit performs display control to display a related information image representing the related information on the side of the another one of the users, and
   the information processing unit updates the shared area so as to surround the document image and the related information image.
(6)
   The information processing device according to item (4),
   in which the shared area is set on the side of the one of the users so as to surround at least one or more shared objects that are shared with the side of the another one of the users therein, and
   when the information processing unit recognizes that the one of the users has changed the number of the shared objects on the basis of the detection result, the information processing unit updates the shared area so as to surround one or a plurality of the shared objects.
(7)
   The information processing device according to item (5),
   in which, in a case where it is recognized that a private area that is not shared with the side of the another one of the users is set between a first one of the document image and a second one of the document image and that the one of the users moves a fingertip from the first one of the document image to the second one of the document image while maintaining the pointing gesture, the display control unit performs display control of hiding the pointing image while the fingertip is in the private area.
(8)
   The information processing device according to item (5),
   in which, in a case where it is recognized that a private area that is not shared with the side of the another one of the users is set between a first one of the document image and a second one of the document image and that the one of the users moves a fingertip from the first one of the document image to the second one of the document image while maintaining the pointing gesture, the display control unit performs display control of stopping updating the display of the pointing image at the specified point that has been recognized most recently in the first one of the document image.
(9)
   The information processing device according to item (5),
   in which the display control unit performs display control
   so that the document image is displayed with a far side, as viewed from the one of the users, facing downward on the side of the one of the users,
   that the document image is displayed with a near side, as viewed from the another one of the users, facing downward on the side of the another one of the users, and that a hand of the pointing image is on the far side as viewed from the another one of the users.
(10)
   The information processing device according to item (5),
   in which the display control unit performs display control
   so that the document image is displayed with a near side, as viewed from the one of the users, facing downward on the side of the one of the users,
   that the document image is displayed with a near side, as viewed from the another one of the users, facing downward on the side of the another one of the users, and that a hand of the pointing image is on the far side as viewed from the another one of the users.
(11)
   The information processing device according to item (5),
   in which the display control unit performs display control
   so that the document image is displayed with a near side, as viewed from the one of the users, facing downward on the side of the one of the users,
   that the document image is displayed with a near side, as viewed from the another one of the users, facing downward on the side of the another one of the users, and that a hand of the pointing image is on the near side as viewed from the another one of the users.
(12)
   The information processing device according to any one of items (3) to (11),
   in which the detection result acquiring unit acquires, as the detection result, an object placed in a display area for displaying the image on the side of the another one of the users, and
   the display control unit displays the image so as to fit in an empty space other than an area where the object is placed.
(13)
   The information processing device according to item (12),
   in which, when the image is displayed in the empty space, the display control unit performs display control of switching display of the pointing image of a right hand and the pointing image of a left hand by using a body axis position in an image of the one of the users that is displayed on the side of the another one of the users as a reference.
(14)
   The information processing device according to item (13),
   in which, when a right hand is captured in the image of the one of the users while the pointing image of the right hand is displayed, the display control unit hides the right hand in the image of the user, and
   when a left hand is captured in the image of the one of the users while the pointing image of the left hand is displayed, the display control unit hides the left hand in the image of the user.
(15)
   The information processing device according to item (2),
   in which the detection result acquiring unit acquires biometric information of the another one of the users as the detection result, and
   the information processing unit adjusts a display position or a display size of the one of the users in the image of the one of the users displayed on the side of the another one of the users on the basis of the biometric information.
(16)
   The information processing device according to item (15),
   in which the information processing unit recognizes a relationship between the one of the users and the another one of the users and adjusts the display position or the display size of the one of the users.
(17)
   An information processing method including:
   performing an information process so that a presentation content presented on a side of one of at least two users is different from a presentation content on a side of another one of the users on the basis of a detection result obtained as a result of sensing one of the users when communication is performed by the users while viewing each other's images transmitted and received via a network.
(18)
   An information processing device including:
   an information processing unit that performs an information process so that a presentation content presented on a side of one of at least two users is different from a presentation content on a side of another one of the users on the basis of a detection result obtained as a result of sensing one of the users by performing communication with a terminal that is used when communication is performed by the users while viewing each other's images transmitted and received via a network.

Note that the embodiments are not limited to the above-described embodiments and may include various modifications within a scope not departing from the principles of the present disclosure. Note also that the effects described herein are merely examples and thus are not limiting. Other effects may also be included.

### REFERENCE SIGNS LIST

- 11: Remote communication system
- 12: Network
- 13: Communication terminal
- 14: Server device
- 21: Camera
- 22: Projector unit
- 23: Display unit
- 24: Desk-type screen
- 25: Communication processing unit
- 26: Biosensor
- 31: Projector main body
- 32: Stereo camera
- 33: RGB camera
- 41: Document image
- 42: Pointing image
- 43: Related information image
- 44: Shared object
- 45: Object
- 51: Input unit
- 52: Output unit
- 53: Operation input unit
- 54: Storage unit
- 55: Communication unit
- 56: Control unit
- 61: Transmission unit
- 62: Reception unit
- 71: Detection result acquiring unit
- 72: Information processing unit
- 73: Display control unit

## Claims

1. An information processing device comprising:
an information processing unit that performs an information process so that a presentation content presented on a side of one of at least two users is different from a presentation content on a side of another one of the users on a basis of a detection result obtained as a result of sensing one of the users when communication is performed by the users while viewing each other's images transmitted and received via a network.

2. The information processing device according to claim 1, further comprising:
a detection result acquiring unit that acquires the detection result; and
a display control unit that performs display control to display an image which is the presentation content in accordance with an information process by the information processing unit.

3. The information processing device according to claim 2,
wherein the detection result acquiring unit acquires a motion of a hand of the one of the users as the detection result,
the information processing unit acquires the specified point when having recognized that the one of the users has performed a pointing gesture of specifying a predetermined specified point on a basis of the detection result, and
the display control unit performs display control of displaying a pointing image pointing to the specified point on the side of the another one of the users.

4. The information processing device according to claim 3,
wherein a shared area for sharing display of the image with the side of the another one of the users is set on the side of the one of the users, and
the information processing unit causes the display control unit to control the display of the pointing image when the specified point is within the shared area.

5. The information processing device according to claim 4,
wherein the shared area is set on the side of the one of the users so as to surround a document image that is shared with the side of the another one of the users therein,
in a case where the information processing unit recognizes that the one of the users has performed a tap gesture of tapping a predetermined item of the document image on a basis of the detection result, the information processing unit acquires related information related to the item,
the display control unit performs display control to display a related information image representing the related information on the side of the another one of the users, and
the information processing unit updates the shared area so as to surround the document image and the related information image.

6. The information processing device according to claim 4,
wherein the shared area is set on the side of the one of the users so as to surround at least one or more shared objects that are shared with the side of the another one of the users therein, and
when the information processing unit recognizes that the one of the users has changed the number of the shared objects on a basis of the detection result, the information processing unit updates the shared area so as to surround one or a plurality of the shared objects.

7. The information processing device according to claim 5,
wherein, in a case where it is recognized that a private area that is not shared with the side of the another one of the users is set between a first one of the document image and a second one of the document image and that the one of the users moves a fingertip from the first one of the document image to the second one of the document image while maintaining the pointing gesture, the display control unit performs display control of hiding the pointing image while the fingertip is in the private area.

8. The information processing device according to claim 5,
wherein, in a case where it is recognized that a private area that is not shared with the side of the another one of the users is set between a first one of the document image and a second one of the document image and that the one of the users moves a fingertip from the first one of the document image to the second one of the document image while maintaining the pointing gesture, the display control unit performs display control of stopping updating the display of the pointing image at the specified point that has been recognized most recently in the first one of the document image.

9. The information processing device according to claim 5,
wherein the display control unit performs display control
so that the document image is displayed with a far side, as viewed from the one of the users, facing downward on the side of the one of the users,
that the document image is displayed with a near side, as viewed from the another one of the users, facing downward on the side of the another one of the users, and that a hand of the pointing image is on the far side as viewed from the another one of the users.

10. The information processing device according to claim 5,
wherein the display control unit performs display control
so that the document image is displayed with a near side, as viewed from the one of the users, facing downward on the side of the one of the users,
that the document image is displayed with a near side, as viewed from the another one of the users, facing downward on the side of the another one of the users, and that a hand of the pointing image is on the far side as viewed from the another one of the users.

11. The information processing device according to claim 5,
wherein the display control unit performs display control
so that the document image is displayed with a near side, as viewed from the one of the users, facing downward on the side of the one of the users,
that the document image is displayed with a near side, as viewed from the another one of the users, facing downward on the side of the another one of the users, and that a hand of the pointing image is on the near side as viewed from the another one of the users.

12. The information processing device according to claim 3,
wherein the detection result acquiring unit acquires, as the detection result, an object placed in a display area for displaying the image on the side of the another one of the users, and
the display control unit displays the image so as to fit in an empty space other than an area where the object is placed.

13. The information processing device according to claim 12,
wherein, when the image is displayed in the empty space, the display control unit performs display control of switching display of the pointing image of a right hand and the pointing image of a left hand by using a body axis position in an image of the one of the users that is displayed on the side of the another one of the users as a reference.

14. The information processing device according to claim 13,
wherein, when a right hand is captured in the image of the one of the users while the pointing image of the right hand is displayed, the display control unit hides the right hand in the image of the user, and
when a left hand is captured in the image of the one of the users while the pointing image of the left hand is displayed, the display control unit hides the left hand in the image of the user.

15. The information processing device according to claim 2,
wherein the detection result acquiring unit acquires biometric information of the another one of the users as the detection result, and
the information processing unit adjusts a display position or a display size of the one of the users in the image of the one of the users displayed on the side of the another one of the users on a basis of the biometric information.

16. The information processing device according to claim 15,
wherein the information processing unit recognizes a relationship between the one of the users and the another one of the users and adjusts the display position or the display size of the one of the users.

17. An information processing method comprising:
performing an information process so that a presentation content presented on a side of one of at least two users is different from a presentation content on a side of another one of the users on a basis of a detection result obtained as a result of sensing one of the users when communication is performed by the users while viewing each other's images transmitted and received via a network.

18. An information processing device comprising:
an information processing unit that performs an information process so that a presentation content presented on a side of one of at least two users is different from a presentation content on a side of another one of the users on a basis of a detection result obtained as a result of sensing one of the users by performing communication with a terminal that is used when communication is performed by the users while viewing each other's images transmitted and received via a network.
